# EUROPÄISCHE PATENTSCHRIFT

(11) **EP 1 552 781 B1**
(45) Veröffentlichungstag und Bekanntmachung des Hinweises auf die Patenterteilung: **21.10.2009**
(21) Anmeldenummer: 04030389.3
(22) Anmeldetag: 22.12.2004
(51) Int. Cl.: A47L 15/50

(54) **Geschirrspülmaschine mit einer Auszugsführung des Geschirrkorbs**
Dishwasher with a rack extraction device.
Lave-vaisselle avec glissières d'extraction du panier.

(30) Priorität: 09.01.2004 DE 102004001402
(43) Veröffentlichungstag der Anmeldung: 13.07.2005
(73) Patentinhaber: Schock Metallwerk GmbH, D-73660 Urbach (DE)
(72) Erfinder: Schock, Martin, 73614 Schorndorf (DE)
(74) Vertreter: Hörner, Andreas

(56) Entgegenhaltungen:
- DE-A1- 10 248 512
- FR-A- 1 592 191
- US-A- 5 061 020

## Beschreibung

Die vorliegende Erfindung betrifft eine Vorrichtung mit einer Kammer, deren Innenraum im Betrieb der Vorrichtung zumindest zeitweise von einer Flüssigkeit oder von einem unter einem erhöhten Druck stehenden Gas durchströmt wird, wobei die Vorrichtung mindestens einen Auszug und mindestens eine Auszugsführung, mittels welcher der Auszug längs einer Auszugsrichtung verschieblich an einem Korpus der Kammer gehalten ist, umfaßt. Solch eine Vorrichtung ist aus der US-A-5 061 020 bekannt.

Solche Vorrichtungen sind aus dem Stand der Technik bekannt.

Insbesondere sind Geschirrspülmaschinen mit einer Spülkammer bekannt, deren Innenraum im Betrieb der Geschirrspülmaschine zumindest zeitweise von einer Spülflüssigkeit (Wasser mit Reinigungszusätzen) durchströmt wird, wobei die Geschirrspülmaschine mindestens einen Auszug in Form eines Geschirrkorbes zur Aufnahme der zu reinigenden Gegenstände umfaßt. Der Auszug ist aus der Spülkammer herausziehbar und dabei mittels Rollen an einem Paar herausziehbarer Führungsschienen geführt.

Bei diesen Vorrichtungen ist von Nachteil, daß die Führung des Auszugs mittels der Rollen an den ausziehbaren Führungsschienen schwergängig und wenig präzise ist und daß die Führungsschienen dazu neigen, ungleichmäßig aus dem Innenraum der Spülkammer herausgezogen zu werden, was dazu führt, daß der Auszug beim Ausziehen leicht verkantet. Ferner gelangt im Betrieb der Vorrichtung von den zu reinigenden Gegenständen abgespülter Schmutz auf die Laufbahnen der Führungsschienen, wo er von den den Auszug führenden Rollen festgewalzt wird, was die Laufqualität der Rollen auf den Laufbahnen beeinträchtigt.

Der vorliegenden Erfindung liegt daher die Aufgabe zugrunde, eine Vorrichtung der eingangs genannten Art zu schaffen, welche auch nach längerem Betrieb der Vorrichtung eine präzise und leichtgängige Führung des Auszugs beim Bewegen innerhalb des Innenraums oder beim Herausziehen aus dem Innenraum bzw. beim Einschieben in den Innenraum der Kammer ermöglicht.

Diese Aufgabe wird bei einer Vorrichtung mit den Merkmalen des Oberbegriffs von Anspruch 1 erfindungsgemäß dadurch gelöst, daß die Auszugsführung mindestens eine auszugsseitige Führungsschiene und eine korpusseitige Führungsschiene und mindestens eine Wälzkörperanordnung umfaßt, mittels welcher eine der Führungsschienen an einer anderen Führungsschiene der Auszugsführung längs der Auszugsrichtung verschieblich geführt ist und welche einen Wälzkörperkäfig umfaßt, wobei
- mindestens eine der Führungsschienen der Auszugsführung einen Schienenrücken umfaßt, der zumindest einen sich längs der Auszugsrichtung erstreckenden Teilabschnitt umfaßt, welcher so mit Fluiddurchtrittsöffnungen versehen ist, daß die betreffende Führungsschiene im Betrieb der Vorrichtung von der Flüssigkeit bzw. von dem Gas durchströmbar ist, und/oder
- mindestens ein Wälzkörperkäfig der Auszugsführung einen Käfigrücken umfaßt, der zumindest einen sich längs der Auszugsrichtung erstreckenden Teilabschnitt umfaßt, welcher so mit Fluiddurchtrittsöffnungen versehen ist, daß der Wälzkörperkäfig im Betrieb der Vorrichtung von der Flüssigkeit bzw. von dem Gas durchströmbar ist.

Unter dem Schienenrücken einer Führungsschiene ist dabei der zwei Wälzkörperlaufbahnen der Führungsschiene miteinander verbindende Steg zu verstehen. Unter dem Käfigrücken eines Wälzkörperkäfigs ist der zwei Wälzkörperhalteleisten des Wälzkörperkäfigs miteinander verbindende Steg zu verstehen.

Unter einem "Auszug" ist in dieser Beschreibung und in den beigefügten Ansprüchen jedes Element zu verstehen, welches durch Relativverschiebung der Führungsschienen innerhalb der Kammer oder aus der Kammer heraus bzw. in die Kammer hinein bewegbar ist.

Unter einer "Auszugsführung" ist in dieser Beschreibung und in den beigefügten Ansprüchen jede Vorrichtung zu verstehen, bei welcher mindestens zwei Führungsschienen relativ zueinander verschieblich gehalten sind; es ist hierbei unerheblich, ob eine der Führungsschienen aus der anderen herausgezogen wird oder nicht.

Die Auszugsrichtung kann grundsätzlich beliebig ausgerichtet sein, insbesondere im wesentlichen horizontal oder im wesentlichen vertikal.

Das unter einem erhöhten Druck stehende Gas kann jedes Gas oder Gasgemisch sein, welches unter einem Druck steht, der gegenüber dem Umgebungsdruck erhöht ist, beispielsweise die Luft in einem Druckluftstrahl.

Der erfindungsgemäßen Lösung liegt somit das Konzept zugrunde, zum Führen des Auszugs eine Auszugsführung mit wälzkörpergelagerten Führungsschienen zu verwenden, welche eine besonders präzise und leichtgängige Führung des Auszugs beim Bewegen innerhalb des Innenraums oder beim Herausziehen aus dem Innenraum bzw. beim Hineinschieben in den Innenraum der Kammer der Vorrichtung ermöglicht.

Dabei ist durch die in den Schienenrücken der Führungsschienen und/oder in den Käfigrücken der Wälzkörperkäfige vorhandenen Fluiddurchtrittsöffnungen, durch welche die die Kammer durchströmende Flüssigkeit bzw. das Gas in die Auszugsführung hinein- und wieder aus der Auszugsführung herausgelangen kann, gewährleistet, daß die Auszugsführung, und zwar insbesondere deren Wälzkörperlaufbahnen, nicht mit Ablagerungen von Schmutzpartikeln zugesetzt und somit unbrauchbar wird, sondern vielmehr von dieser Flüssigkeit bzw. von dem Gas möglichst ungehindert durchspült und aufgrund dieser Durchspülung von Schmutzablagerungen weitgehend freigehalten wird.

Dieses der Erfindung zugrundeliegende Konzept ist sehr überraschend, da es an sich viel näher liegen würde, eine Verschmutzung der Laufbahnen der Auszugsführung dadurch zu verhindern, daß der Innenraum der Auszugsführung möglichst weitgehend gegen das Eindringen von Flüssigkeit bzw. von Gas aus dem Innenraum der Kammer abgeschottet wird, um so ein Eindringen von Schmutzpartikeln, die die Flüssigkeit bzw. das Gas von den zu reinigenden Gegenständen im Innenraum der Kammer abspült, zu verhindern. Es hat sich nun aber unerwarteterweise herausgestellt, daß das Eindringen von Flüssigkeit bzw. Gas, auch wenn sie bzw. es mit Schmutzpartikeln beladen ist, in die Auszugsführung für die ordnungsgemäße Funktion der Auszugsführung unschädlich ist, sofern nur gewährleistet ist, daß die Flüssigkeit bzw. das Gas mit den darin mitgeführten Schmutzpartikeln auch möglichst ungehindert wieder aus der Auszugsführung herausströmen kann. Auf diese Weise wird verhindert, daß sich Schmutzpartikel in der Auszugsführung, insbesondere auf deren Wälzkörperlaufflächen, ansammeln und so die ordnungsgemäße Funktion der Auszugsführung beeinträchtigen könnten.

Bei der erfindungsgemäßen Vorrichtung ist vorgesehen, daß mindestens eine der Führungsschienen und/oder mindestens ein Wälzkörperkäfig mit den Fluiddurchtrittsöffnungen versehen ist.

Eine besonders gute Durchströmbarkeit der Auszugsführung wird erreicht, wenn alle Führungsschienen der Auszugsführung und/oder alle Wälzkörperkäfige der Auszugsführung mit solchen Fluiddurchtrittsöffnungen versehen sind.

Besonders günstig ist es, wenn sowohl alle Führungsschienen als auch alle Wälzkörperkäfige der Auszugsführung mit solchen Fluiddurchtrittsöffnungen versehen sind.

Sofern neben den Führungsschienen und Wälzkörperkäfigen weitere Anbauelemente vorhanden sind, so sollten auch diese möglichst durchflutungsfreundlich gestaltet sein, um den Flüssigkeitsstrom bzw. den Gasstrom durch die Auszugsführung möglichst wenig zu behindern oder diesen gar zu begünstigen, was insbesondere dann möglich ist, wenn ein im Innenraum der Kammer der Vorrichtung erzeugter Flüssigkeitsstrahl bzw. Druckgasstrahl durch ein entsprechende Gestaltung der Anbauelemente gezielt auf Fluiddurchtrittsöffnungen der Auszugsführung gelenkt wird.

Versuche an Geschirrspülmaschinen haben bestätigt, daß es für eine effiziente Herausspülung von Reststoffen, insbesondere Schmutzpartikeln, aus der Auszugsführung günstig ist, wenn der Flächenanteil der Fluiddurchtrittsöffnungen der Führungsschiene an der gesamten Fläche des Schienenrückens (einschließlich der Fläche der Fluiddurchtrittsöffnungen) in dem Teilabschnitt, der mit den Fluiddurchtrittsöffnungen versehen ist, mindestens ungefähr 20 % beträgt.

Wenn die Fluiddurchtrittsöffnungen im Käfigrücken eines Wälzkörperkäfigs vorgesehen sind, so hat es sich als günstig erwiesen, wenn der Flächenanteil der Fluiddurchtrittsöffnungen des Wälzkörperkäfigs an der gesamten Fläche des Käfigrückens (einschließlich der Fläche der Fluiddurchtrittsöffnungen) in dem Teilabschnitt, der mit den Fluiddurchtrittsöffnungen versehen ist, mindestens ungefähr 20 % beträgt.

Mit wachsendem Flüssigkeitsdurchsatz bzw. Gasdurchsatz durch die Auszugsführung wird die Reinigungswirkung der durch die Auszugsführung hindurchtretenden Flüssigkeit bzw. des Gases stärker.

Es ist daher besonders günstig, wenn der Flächenanteil der Fluiddurchtrittsöffnungen der Führungsschiene an der gesamten Fläche des Schienenrückens (einschließlich der Fläche der Fluiddurchtrittsöffnungen) in dem Teilabschnitt, der mit den Fluiddurchtrittsöffnungen versehen ist, mindestens ungefähr 25 %, vorzugsweise mindestens ungefähr 30 %, insbesondere mindestens ungefähr 40 %, beträgt.

Alternativ oder ergänzend hierzu ist es besonders günstig, wenn der Flächenanteil der Fluiddurchtrittsöffnungen des Wälzkörperkäfigs an der gesamten Fläche des Käfigrückens (einschließlich der Fläche der Fluiddurchtrittsöffnungen) in dem Teilabschnitt, der mit den Fluiddurchtrittsöffnungen versehen ist, mindestens ungefähr 25 %, vorzugsweise mindestens ungefähr 30 %, insbesondere mindestens ungefähr 40 %, beträgt.

Andererseits sollte der Flächenanteil der Fluiddurchtrittsöffnungen an der gesamten Fläche des Schienenrückens bzw. des Käfigrückens nicht zu groß werden, damit eine ausreichende mechanische Stabilität der Auszugsführung gewährleistet bleibt.

Die mit einer ausreichenden mechanischen Stabilität der Auszugsführung vereinbare Obergrenze für den Flächenanteil der Fluiddurchtrittsöffnungen hängt insbesondere von der Geometrie der Führungsschienenprofile, von den verwendeten Werkstoffen, von der Beladung, von dem Verhältnis zwischen der Baulänge und der Auszugslänge der Auszugsführung und von der Anbindung der Auszugsführung an die Umgebung, das heißt insbesondere von der Art der Befestigung der Auszugsführung an den Begrenzungswänden der Kammer, ab.

Für die Erhaltung einer ausreichenden mechanischen Stabilität der Auszugsführung hat es sich als günstig erwiesen, wenn der Flächenanteil der Fluiddurchtrittsöffnungen der Führungsschiene an der gesamten Fläche des Schienenrückens (einschließlich der Fläche der Fluiddurchtrittsöffnungen) in dem Teilabschnitt, der mit den Fluiddurchtrittsöffnungen versehen ist, höchstens ungefähr 90 %, vorzugsweise höchstens ungefähr 80 %, beträgt.

Alternativ oder ergänzend hierzu ist es von Vorteil, wenn der Flächenanteil der Fluiddurchtrittsöffnungen des Wälzkörperkäfigs an der gesamten Fläche des Käfigrückens (einschließlich der Fläche der Fluiddurchtrittsöffnungen) in dem Teilabschnitt, der mit den Fluiddurchtrittsöffnungen versehen ist, höchstens ungefähr 90 %, vorzugsweise höchstens ungefähr 80 %, beträgt.

Insbesondere kann eine Fachwerkstruktur in den Schienenrücken und/oder in den Käfigrücken eingebracht werden, die ein optimales Durchspülungsverhalten unter den vorgegebenen mechanischen Randbedingungen zuläßt.

Die Fluiddurchtrittsöffnungen können grundsätzlich durch jedes beliebige Verfahren, durch welches das Material der Durchtrittsöffnungen aus dem umgebenden Material heraustrennbar ist, hergestellt werden.

Insbesondere kann vorgesehen sein, daß die Fluiddurchtrittsöffnungen durch Ausstanzen in den Schienenrücken bzw. den Käfigrücken eingebracht werden.

Um besonders hohe Öffnungsverhältnisse erzielen zu können, ohne daß Verwerfungen in der Führungsschiene bzw. in dem Wälzkörperkäfig auftreten, ist es jedoch günstig, die Fluiddurchtrittsöffnungen durch ein kräftefreies Trennverfahren in die Führungsschiene bzw. in den Wälzkörperkäfig einzubringen.

Insbesondere kann vorgesehen sein, daß die Fluiddurchtrittsöffnungen mittels eines Laserschneidverfahrens in die Führungsschiene bzw. in den Wälzkörperkäfig eingebracht werden.

Durch ein solches Laserschneidverfahren sind ohne weiteres Flächenanteile der Fluiddurchtrittsöffnungen im Bereich von ungefähr 80 % bis ungefähr 90 % erzielbar.

Statt die Fluiddurchtrittsöffnungen aus dem Schienenrücken bzw. Käfigrücken herauszutrennen, kann auch vorgesehen sein, daß der Schienenrücken bzw. der Käfigrücken von vornherein mit den gewünschten Fluiddurchtrittsöffnungen gebildet wird, beispielsweise durch ein Gießverfahren (insbesondere ein Kunststoff-Spritzgießverfahren) oder durch Zusammensetzen des Schienenrückens bzw. Käfigrückens aus mehreren Bestandteilen in der Weise, daß Zwischenräume zwischen den zusammengesetzten Bestandteilen die gewünschten Fluiddurchtrittsöffnungen ergeben.

Um einen möglichst hohen Flüssigkeitsdurchsatz bzw. Gasdurchsatz durch die Auszugsführung zu erzielen, ist es von Vorteil, wenn sich mindestens einer der mit Fluiddurchtrittsöffnungen versehenen Teilabschnitte über mindestens ein Drittel der Länge des Schienenrückens bzw. über mindestens ein Drittel der Länge des Käfigrückens erstreckt.

Ferner ist es günstig, wenn die Summe der Längen der mit Fluiddurchtrittsöffnungen versehenen Teilabschnitte des Schienenrückens bzw. des Käfigrückens größer ist als ungefähr zwei Drittel der gesamten Länge des Schienenrückens bzw. des Käfigrückens.

Besonders günstig ist es, wenn der gesamte Schienenrücken bzw. der gesamte Käfigrücken einen einzigen mit Fluiddurchtrittsöffnungen versehenen Teilabschnitt bildet, in welchem die vorstehend genannten Flächenanteile der Fluiddurchtrittsöffnungen erreicht werden.

In diesem Fall beträgt also der Flächenanteil der Fluiddurchtrittsöffnungen der Führungsschiene an der gesamten Fläche des Schienenrückens (einschließlich der Fläche der Fluiddurchtrittsöffnungen) mindestens ungefähr 20 %, vorzugsweise mindestens ungefähr 25 %, insbesondere mindestens ungefähr 30 %, besonders bevorzugt mindestens ungefähr 40 %.

Alternativ oder ergänzend hierzu beträgt in diesem Fall der Flächenanteil der Fluiddurchtrittsöffnungen des Wälzkörperkäfigs an der gesamten Fläche des Käfigrückens (einschließlich der Fläche der Fluiddurchtrittsöffnungen) mindestens ungefähr 20 %, vorzugsweise mindestens ungefähr 25 %, insbesondere mindestens ungefähr 30 %, besonders bevorzugt mindestens ungefähr 40 %.

Grundsätzlich ist es von Vorteil, wenn die Fluiddurchtrittsöffnungen so nahe wie möglich an die Wälzkörperlaufbahnen der Führungsschienen heranreichen, damit zum einen möglichst wenig Strömungsverluste innerhalb der Auszugsführung entstehen, so daß der Flüssigkeitsstrahl bzw. der Druckgasstrahl mit möglichst hoher Energie auf die abzutragenden Rückstände auftrifft und diese fortspült, und damit zum anderen im Bereich der Wälzkörperlaufbahnen keine Totwasserzonen entstehen, in denen sich Restflüssigkeit oder Spülrückstände sammeln können.

Es ist daher von Vorteil, wenn mindestens ein Teilabschnitt einer Führungsschiene der Auszugsführung Fluiddurchtrittsöffnungen aufweist, deren seitlicher Abstand von mindestens einem der seitlichen Ränder des Schienenrückens der betreffenden Führungsschiene kleiner ist als ungefähr ein Viertel der Breite des Schienenrückens.

Die Auszugsführungen können in der Kammer sowohl stehend (das heißt mit vertikal ausgerichteten Schienenrücken) als auch liegend (das heißt mit horizontal ausgerichteten Schienenrücken) eingebaut werden. Die optimale Einbausituation ist von der gewählten Dimension der Schienen, von den eingesetzten Materialien und von den anliegenden Belastungen abhängig.

Wenn die Auszugsführung stehend eingebaut wird, so ist es für das Ablaufen der Flüssigkeit aus der Auszugsführung besonders günstig, wenn mindestens ein Teilabschnitt einer Führungsschiene der Auszugsführung Fluiddurchtrittsöffnungen mit einem unteren Rand aufweist, dessen Abstand von einem unteren Rand des Schienenrückens der betreffenden Führungsschiene kleiner ist als ungefähr ein Viertel der Breite des Schienenrückens.

Dabei ist unter der Breite des Schienenrückens die Ausdehnung des Schienenrückens senkrecht zur Auszugsrichtung zu verstehen.

Bei einer bevorzugten Ausgestaltung der erfindungsgemäßen Vorrichtung ist vorgesehen, daß der mit den Fluiddurchtrittsöffnungen versehene Teilabschnitt des Schienenrückens bzw. des Käfigrückens jeweils mindestens drei im wesentlichen miteinander kongruente Fluiddurchtrittsöffnungen aufweist.

Da bei bevorzugten Ausführungsformen der erfindungsgemäßen Vorrichtung die Auszugsführung mehrere relativ zueinander verschiebbare Bauelemente (Führungsschienen und Wälzkörperkäfige) aufweist, die jeweils mit Fluiddurchtrittsöffnungen versehen sind, wobei die Fluiddurchtrittsöffnungen:verschiedener Bauelemente in bestimmten Stellungen der Auszugsführung miteinander fluchten und in anderen Stellungen der Auszugsführung gegeneinander versetzt sind, besteht grundsätzlich die Gefahr, daß Bedienungspersonen, insbesondere Kinder, mit einem oder mehreren Fingern in miteinander fluchtende Fluiddurchtrittsöffnungen hineingreifen und der bzw. die Finger bei einer anschließender Relativverschiebung der Bauelemente der Auszugsführung gequetscht werden.

Um diese Gefahr auszuschließen, ist es von Vorteil, wenn jede der Fluiddurchtrittsöffnungen des Schienenrückens bzw. des Käfigrückens der Auszugsführung in mindestens einer Erstreckungsrichtung eine Ausdehnung von höchstens ungefähr 5 mm aufweist. Solche Fluiddurchtrittsöffnungen sind dann zu klein, als daß ein oder gar mehrere Finger durch miteinander fluchtende Fluiddurchtrittsöffnungen hindurchgesteckt werden könnten.

Als besonders günstig hat es sich erwiesen, wenn jede der Fluiddurchtrittsöffnungen des Schienenrückens bzw. des Käfigrückens längs der Auszugsrichtung eine Ausdehnung von höchstens ungefähr 5 mm aufweist.

Um die Strömung der Flüssigkeit bzw. des Gases durch die Auszugsführung möglichst wenig zu behindern, ist bei einer bevorzugten Ausgestaltung der erfindungsgemäßen Vorrichtung vorgesehen, daß mindestens eine Führungsschiene der Auszugsführung und mindestens ein Wälzkörperkäfig derselben Auszugsführung mit Fluiddurchtrittsöffnungen versehen sind.

Um eine einwandfreie Durchspülung der Auszugsführung zu gewährleisten, hat es sich als besonders günstig erwiesen, wenn in einem vollständig in den Innenraum der Kammer eingeschobenen Zustand der Auszugsführung mindestens eine Fluiddurchtrittsöffnung der Führungsschiene und mindestens eine Fluiddurchtrittsöffnung des Wälzkörperkäfigs miteinander fluchten.

Dabei ist unter einem "Fluchten" zweier nebeneinander angeordneter Fluiddurchtrittsöffnungen verschiedener Bauteile der Auszugsführung jede Situation zu verstehen, in welcher die Fluiddurchtrittsöffnung des einen Bauteils die betreffende Fluiddurchtrittsöffnung in dem anderen Bauteil (in einer senkrecht zur Auszugsrichtung verlaufenden Richtung gesehen) im wesentlichen vollständig überdeckt. Für ein "Fluchten" in diesem Sinne ist es nicht erforderlich, daß sich die Begrenzungslinien der beiden einander zu geordneten Fluiddurchtrittsöffnungen miteinander decken.

Für eine einwandfreie Durchspülung der Auszugsführung ist es günstig, wenn im vollständig in den Innenraum der Kammer eingeschobenen Zustand der Auszugsführung mehrere Fluiddurchtrittsöffnungen der Führungsschiene mit jeweils einer Fluiddurchtrittsöffnung des Wälzkörperkäfigs fluchten.

Besonders günstig ist es, wenn im vollständig in den Innenraum der Kammer eingeschobenen Zustand der Auszugsführung im wesentlichen alle Fluiddurchtrittsöffnungen der Führungsschiene mit jeweils einer Fluiddurchtrittsöffnung des Wälzkörperkäfigs fluchten.

Um in der Auszugsführung Verwirbelungen der durchströmenden Flüssigkeit bzw. des Gases zu erzeugen, welche Schmutzpartikel wirksam ablösen können, kann es auch von Vorteil sein, wenn in dem vollständig in den Innenraum der Kammer eingeschobenen Zustand die Ränder von Fluiddurchtrittsöffnungen einander benachbarter Bauelemente der Auszugsführung (Führungsschienen oder Wälzkörperkäfige) so gegeneinander in der Auszugsrichtung versetzt sind, daß jeweils eines der Bauelemente die Fluiddurchtrittsöffnungen des jeweils anderen Baueiements teilweise, jedoch nicht vollständig, überdeckt. Auf diese Weise wird erreicht, daß die Flüssigkeit bzw. das Gas in jeden Bereich der Auszugsführung eintreten kann und daß durch die versetzten Ränder Hindernisse im Weg der Flüssigkeit bzw. des Gases gebildet sind, welche die erwünschten Verwirbelungen erzeugen.

Um den Ablauf von Restflüssigkeit von der Wälzkörperlaufbahn einer Führungsschiene der Auszugsführung zu ermöglichen, ist es von Vorteil, wenn mindestens eine Führungsschiene der Auszugsführung eine Wälzkörperlaufbahn umfaßt, die mit mindestens einer Fluiddurchtrittsöffnung versehen ist.

Da das Vorhandensein solcher Fluiddurchtrittsöffnungen in der Wälzkörperlaufbahn negative Auswirkungen auf die Laufqualität der Wälzkörper in der Wälzkörperlaufbahn haben könnte, ist es günstig, wenn die Wälzkörperlaufbahn nur in einem Endbereich oder in beiden Endbereichen derselben mit einer oder mit mehreren Fluiddurchtrittsöffnungen versehen ist.

Durch in einem Endbereich der Wälzkörperlaufbahn vorhandene Fluiddurchtrittsöffnungen kann auch eine gewisser Rasteffekt für die Wälzkörper in der maximal ausgezogenen Stellung der Auszugsführung erzielt werden.

Bei einer bevorzugten Ausgestaltung der erfindungsgemäßen Vorrichtung ist vorgesehen, daß mindestens eine Wälzkörperanordnung der Auszugsführung als Kugeln oder als ballige Walzen, welche die Wälzkörperlaufbahn nur längs einer Linie berühren, ausgebildete Wälzkörper umfaßt.

Besonders günstig ist es, wenn mindestens eine Wälzkörperanordnung der Auszugsführung Wälzkörper umfaßt, die jeweils in Ein-Punkt-Kontakt mit einer Wälzkörperlaufbahn einer den Wälzkörpern zugeordneten Führungsschiene der Auszugsführung stehen. Durch einen solchen Ein-Punkt-Kontakt des Wälzkörpers mit der zugeordneten Wälzkörperlaufbahn entsteht ein Schneepflugeffekt, das heißt der Wälzkörper furcht durch eventuell auf der Wälzkörperlaufbahn vorhandene Ablagerungen hindurch und verdrängt eventuell auf der Wälzkörperlaufbahn angesammelten Schmutz zur Seite hin aus der Wälzkörperlaufbahn heraus. Auf diese Weise wird ein Selbstreinigungseffekt der Wälzkörperlaufbahn erzielt.

Alternativ zu einer Ein-Punkt-Auflage der Wälzkörper an der Wälzkörperlaufbahn könnte auch vorgesehen sein, daß die Wälzkörper an zwei quer zur Auszugsrichtung voneinander beabstandeten Stellen an der Wälzkörperlaufbahn anliegen. In diesem Fall kann insbesondere der zwischen den Anlagestellen liegende Bereich der Wälzkörperlaufbahn mit Fluiddurchtrittsöffnungen versehen sein, so daß Schmutz von der Wälzkörperlaufbahn durch diese Fluiddurchtrittsöffnungen herausgespült werden kann.

Die Auszugsführung der erfindungsgemäßen Vorrichtung kann als zweiteiliger Teilauszug ausgebildet sein, das heißt nur die auszugsseitige Führungsschiene und die korpusseitige Führungsschiene umfassen.

Es kann jedoch auch vorgesehen sein, daß die Auszugsführung mindestens dreiteilig ausgebildet ist und somit neben der auszugsseitigen Führungsschiene und der korpusseitigen Führungsschiene mindestens eine weitere Führungsschiene umfaßt, die zwischen der auszugsseitigen Führungsschiene und der korpusseitigen Führungsschiene angeordnet ist.

Eine solche Auszugsführung kann beispielsweise als Mehrfachauszug (zwei gekoppelte Teilauszüge) oder als Teleskopauszug (mit einer korpusseitigen Führungsschiene, einer relativ dazu verschiebbaren mittleren Führungsschiene und einer in der mittleren Führungsschiene verschiebbaren auszugsseitigen Führungsschiene) ausgebildet sein.

Um den in dem Innenraum der Kammer angeordneten Auszug für eine Beladung oder Entladung desselben möglichst gut zugänglich zu machen, ist es von Vorteil, wenn die Auszugsführung als Vollauszugsführung ausgebildet ist, mittels welcher der Auszug im wesentlichen vollständig aus dem Innenraum der Kammer herausziehbar ist.

Die erfindungsgemäße Vorrichtung kann insbesondere als eine Spülmaschine oder als eine Waschmaschine ausgebildet sein.

Grundsätzlich kommen jedoch auch andere Ausbildungen der erfindungsgemäßen Vorrichtung in Betracht, beispielsweise als Desinfektionsvorrichtung, Sterilisationsvorrichtung, Strömungsgerät oder ähnliches, also sämtliche Vorrichtungen, welche eine Kammer aufweisen, die während des Betriebes der Vorrichtung zumindest zeitweise von einer Flüssigkeit durchströmt wird.

Anspruch 24 ist gerichtet auf die Verwendung einer Auszugsführung, die mindestens eine auszugsseitige Führungsschiene und eine korpusseitige Führungsschiene und mindestens eine Wälzkörperanordnung umfaßt, mittels welcher die auszugsseitige Führungsschiene an der korpusseitigen Führungsschiene oder an einer weiteren Führungsschiene der Auszugsführung längs einer Auszugsrichtung verschieblich geführt ist und welche einen Wälzkörperkäfig umfaßt, wobei
- mindestens eine der Führungsschienen der Auszugsführung einen Schienenrücken umfaßt, der zumindest einen sich längs der Auszugsrichtung erstreckenden Teilabschnitt umfaßt, welcher so mit Fluiddurchtrittsöffnungen versehen ist, daß die Führungsschiene von einer Flüssigkeit oder von einem Gas durchströmbar ist, und/oder
- mindestens ein Wälzkörperkäfig der Auszugsführung einen Käfigrücken umfaßt, der zumindest einen sich längs der Auszugsrichtung erstreckenden Teilabschnitt umfaßt, welcher so mit Fluiddurchtrittsöffnungen versehen ist, daß der Wälzkörperkäfig von einer Flüssigkeit oder von einem Gas durchströmbar ist,
zum verschiebbaren Halten eines Auszugs an einem Korpus einer Kammer in einer Vorrichtung, deren Innenraum im Betrieb der Vorrichtung zumindest zeitweise von einer Flüssigkeit oder von einem unter einem erhöhten Druck stehenden Gas durchströmt wird.

Die Vorteile einer solchen Verwendung einer solchen Auszugsführung wurden bereits vorstehend im Zusammenhang mit der erfindungsgemäßen Vorrichtung erläutert.

Besondere Ausgestaltungen einer solchen Verwendung sind Gegenstand der abhängigen Ansprüche 25 bis 40, deren Vorteile bereits vorstehend im Zusammenhang mit den besonderen Ausgestaltungen der erfindungsgemäßen Vorrichtung erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Vorrichtung, beispielsweise einer Spülmaschine, mit einer Kammer, deren Innenraum im Betrieb der Vorrichtung zumindest zeitweise von einer Flüssigkeit durchspült wird, in einem Zustand, in dem eine Frontklappe der Vorrichtung geöffnet und ein mittels zweier Auszugsführungen an Seitenwänden der Kammer gehaltener Auszug aus dem Innenraum der Kammer herausgezogen ist;
- Fig. 2: einen schematischen vertikalen Schnitt durch die Kammer der Vorrichtung aus Fig. 1 im Betrieb der Vorrichtung, in welchem der Innenraum der Kammer von einer Flüssigkeit durchspült wird;
- Fig. 3: eine schematische perspektivische Darstellung einer Auszugsführung der Vorrichtung aus den Fig. 1 und 2, in einem ausgezogenen Zustand der Auszugsführung;
- Fig. 4: eine schematische perspektivische Darstellung der Auszugsführung aus Fig. 3, in einem eingeschobenen Zustand der Auszugsführung, in welchem die Auszugsführung von der Flüssigkeit durchspült wird;
- Fig. 5: eine schematische Seitenansicht einer Auszugsführung der Vorrichtung aus den Fig. 1 und 2, die als Mehrfachauszug mit einer korpusseitigen Führungsschiene, einer auszugsseitigen Führungsschiene und einer zwischen der korpusseitigen Führungsschiene und der auszugsseitigen Führungsschiene angeordneten mittleren Führungsschiene ausgebildet ist;
- Fig. 6: einen schematischen Querschnitt durch die Auszugsführung aus Fig. 5;
- Fig. 7: eine schematische Seitenansicht einer korpusseitigen Führungsschiene der Auszugsführung aus Fig. 5;
- Fig. 8: eine schematische Seitenansicht einer ersten Wälzkörperanordnung der Auszugsführung aus Fig. 5;
- Fig. 9: eine schematische Seitenansicht einer mittleren Führungsschiene der Auszugsführung aus Fig. 5;
- Fig. 10: eine schematische Seitenansicht einer zweiten Wälzkörperanordnung der Auszugsführung aus Fig. 5;
- Fig. 11: eine schematische Seitenansicht einer auszugsseitigen Führungsschiene der Auszugsführung aus Fig. 5; und ,
- Fig. 12: eine schematische Draufsicht auf einen Endbereich einer Wälzkörperlaufbahn einer der Führungsschienen der Auszugsführung aus Fig. 5.

Gleiche oder funktional äquivalente Elemente sind in allen Figuren mit denselben Bezugszeichen bezeichnet.

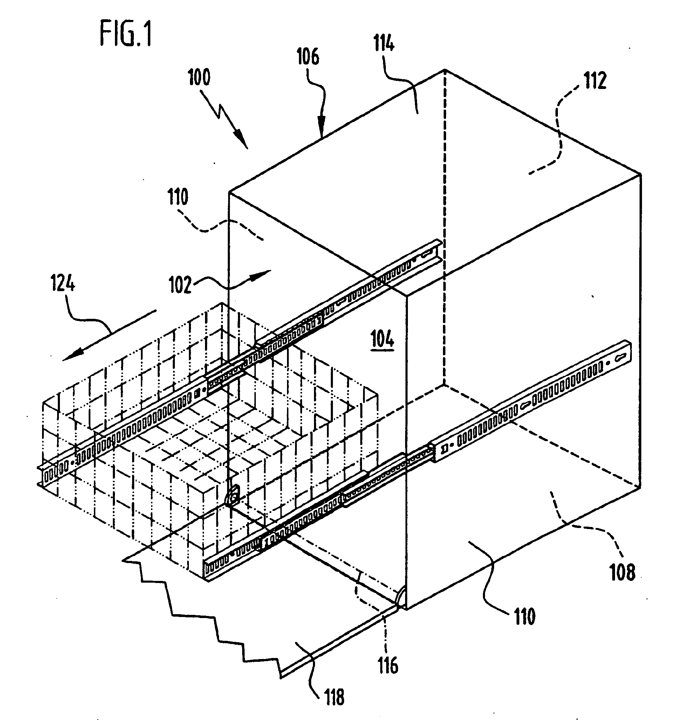

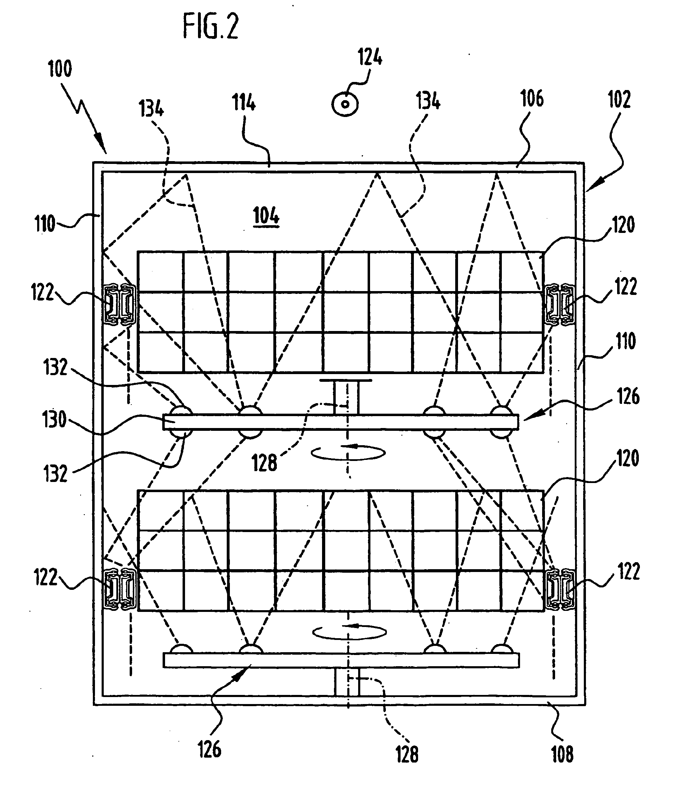

Eine in den Fig. 1 und 2 dargestellte, als Ganzes mit 100 bezeichnete Vorrichtung ist beispielsweise als Geschirrspülmaschine ausgebildet und umfaßt eine im Betrieb der Vorrichtung zumindest zeitweise von einer Flüssigkeit, beispielsweise von Wasser mit Spülmittelzusätzen, durchströmbare Kammer 102 mit einem Innenraum 104, der von einem Korpus 106 der Kammer 102 begrenzt wird.

Der Korpus 106 umfaßt eine Bodenwand 108, von der sich zwei parallele, vertikale Seitenwände 110 sowie eine die Seitenwände 110 miteinander verbindende vertikale Rückwand 112 nach oben erstrecken, sowie eine eine obere Begrenzung des Innenraums 104 bildende Deckenwand 114 und ist an seiner offenen Vorderseite mittels einer um eine horizontale Achse 116 schwenkbaren Frontklappe 118 flüssigkeitsdicht verschließbar.

Der Innenraum 104 der Kammer 102 nimmt einen oder mehrere, beispielsweise zwei, Auszüge 120 auf, welche beispielsweise als Geschirrkörbe ausgebildet sind.

Alternativ hierzu könnten die Auszüge 120 beispielsweise als Bottiche, Schalen, Tabletts, Halterungen oder ähnliches ausgebildet sein.

Jeder der Auszüge 120 ist mittels jeweils einer Auszugsführung 122 an den beiden Seitenwänden 110 so gehalten, daß er (bei geöffneter Frontklappe 118) längs einer im wesentlichen horizontalen Auszugsrichtung 124 aus dem Innenraum 104 ausziehbar bzw. entgegen der Auszugsrichtung 124 vollständig in den Innenraum 104 der Kammer 102 einschiebbar ist.

Bei den Auszugsführungen 122 handelt es sich um Vollauszugsführungen, welche es erlauben, den jeweils zugeordneten Auszug 120 im wesentlichen vollständig aus dem Innenraum 104 der Kammer 102 herauszuziehen.

Wie aus Fig. 2 zu ersehen ist, sind im Innenraum 104 der Kammer 102 mehrere, beispielsweise zwei, Sprühvorrichtungen 126 angeordnet, welche jeweils einen oder mehrere um eine beispielsweise vertikale Drehachse 128 rotierende Sprüharme 130 umfassen, die jeweils mit mehreren Sprühdüsen 132 versehen sind, die an der Oberseite und/oder an der Unterseite des jeweiligen Sprüharms 130 angeordnet sind und mittels welcher eine Flüssigkeit in den Raum oberhalb bzw. unterhalb der jeweiligen Sprühvorrichtung 126 versprühbar ist.

Im Falle eines Geschirrspülers handelt es sich bei dieser Flüssigkeit um die Spülflüssigkeit, welche insbesondere Wasser mit Spülzusätzen umfassen kann.

Die im Betrieb der Vorrichtung 100 versprühte Flüssigkeit ist in Fig. 2 durch die gebrochenen Linien 134 angedeutet.

Die versprühte Flüssigkeit 134 strömt durch die beispielsweise als Gitterkörbe ausgebildeten Auszüge 120 mit den darin, beispielsweise zu Reinigungszwecken, aufgenommenen Gegenständen und gegebenenfalls durch die Auszugsführungen 122, sammelt sich dann am Boden der Kammer 102 und fließt durch eine (nicht dargestellte) Abflußöffnung aus dem Innenraum 104 der Kammer 102 ab.

Wie in Fig. 2 dargestellt, kann insbesondere eine erste Sprühvorrichtung 126 zwischen der Bodenwand 108 der Kammer 102 und einem unteren Auszug 120 angeordnet sein, während eine weitere Sprühvorrichtung 126 zwischen zwei Auszügen 120, insbesondere an der Unterseite eines oberen Auszugs 120, angeordnet sein kann.

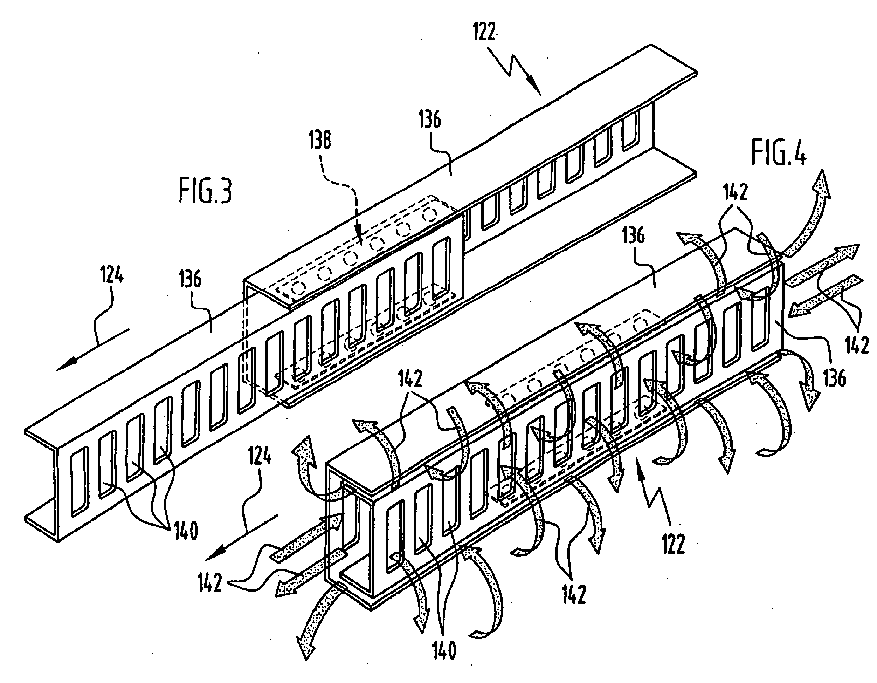

Um es zu ermöglichen, daß von den Sprühdüsen 132 ausgehende Flüssigkeitsstrahlen möglichst ungehindert in die Auszugsführungen 122 eintreten können und daß die in die Auszugsführung 122 eingetretene Flüssigkeit an den Auszugsführungen 122 abgelagerte Rückstände, insbesondere Schmutzpartikel, lösen und aus den Auszugsführungen 122 herausspülen kann, und zwar unter möglichst geringen Strömungsverlusten, sind die Führungsschienen 136 der Auszugsführungen 122, welche mittels Wälzkörperanordnungen 138 längs der Auszugsrichtung 124 verschieblich aneinander geführt sind, jeweils mit einer Vielzahl von Flüssigkeitsdurchtrittsöffnungen 140 versehen, welche längs der Auszugsrichtung 124 aufeinanderfolgen und sowohl ein Eintreten der Flüssigkeit in die Auszugsführung 122 als auch ein Ausströmen der Flüssigkeit (und darin enthaltener Schmutzpartikel) aus der Auszugsführung 122 ermöglichen, wie dies schematisch in den Fig. 3 und 4 dargestellt ist.

In Fig. 3 ist eine Auszugsführung 122 mit zwei Führungsschienen 136 im ausgezogenen Zustand dargestellt.

In Fig. 4 ist die Auszugsführung 122 im vollständig eingeschobenen Zustand dargestellt, nachdem die Vorrichtung 100 in Betrieb genommen worden ist. In diesem Zustand wird die Auszugsführung 122 von der im Innenraum 104 der Kammer 102 versprühten Flüssigkeit durchspült, wobei die Strömungsrichtungen dieser Flüssigkeit in Fig. 4 schematisch durch die Pfeile 142 angedeutet sind.

Um das Eintreten und Austreten der Flüssigkeit möglichst wenig zu behindern, sind die Führungsschienen 136 vorzugsweise so ausgebildet, daß ihre Fluiddurchtrittsöffnungen 140 im vollständig eingeschobenen Zustand der Auszugsführung 122 miteinander und mit den Fluiddurchtrittsöffnungen eines in Fig. 4 nicht dargestellten Wälzkörperkäfigs fluchten.

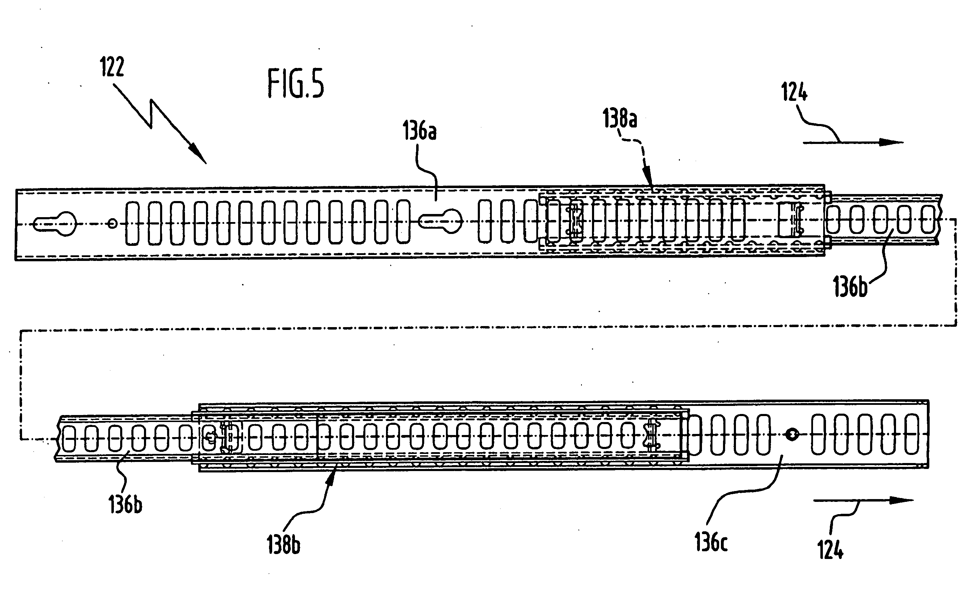

Ein konkretes Beispiel einer für die Verwendung in einer flüssigkeitsdurchströmten Kammer 102 besonders geeigneten Auszugsführung 122 mit drei Führungsschienen ist in den Fig. 5 bis 11 im einzelnen dargestellt.

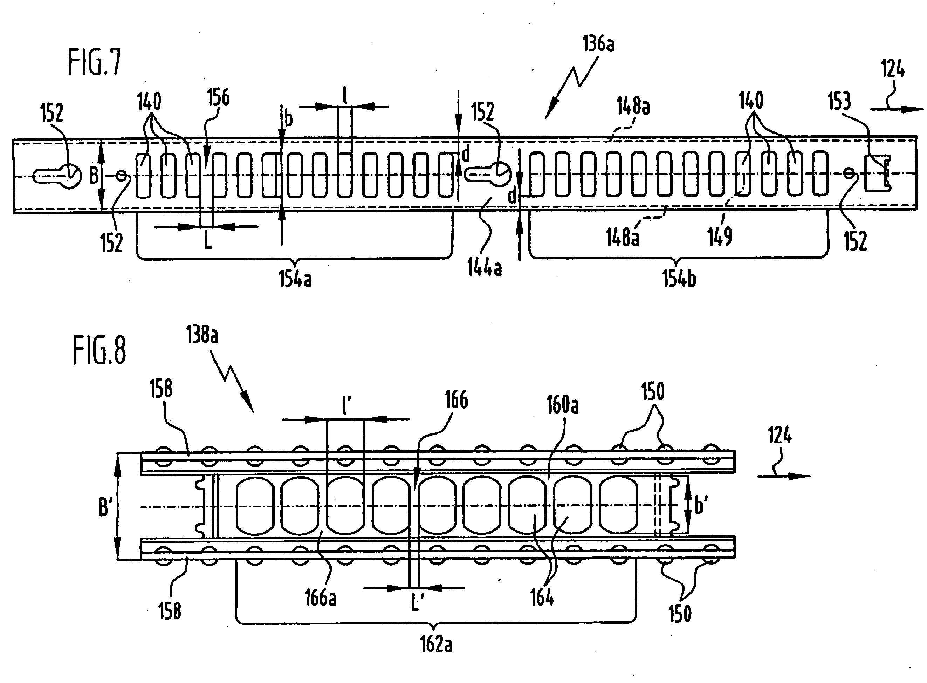

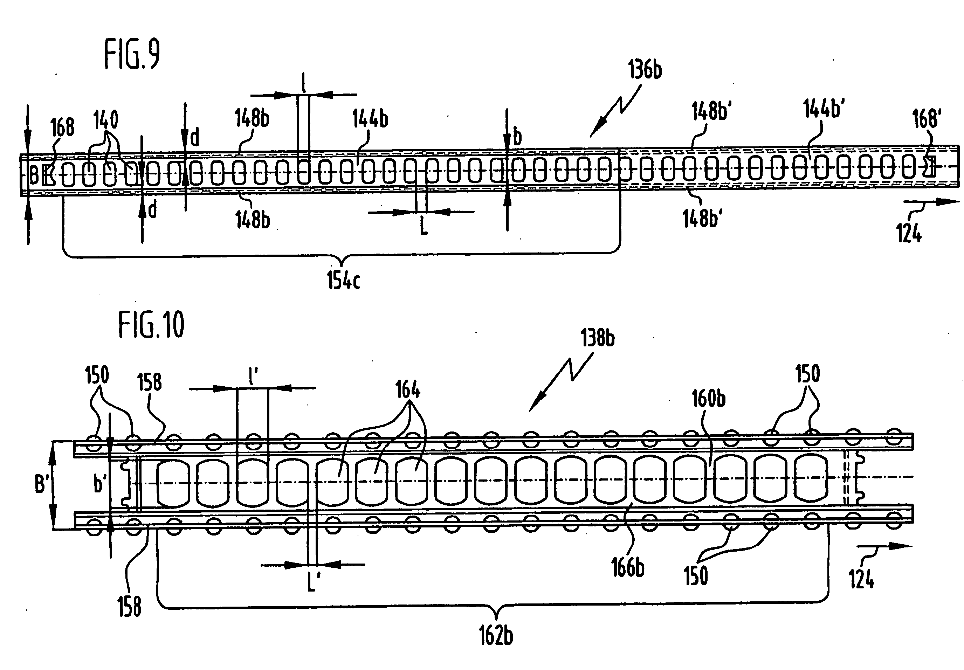

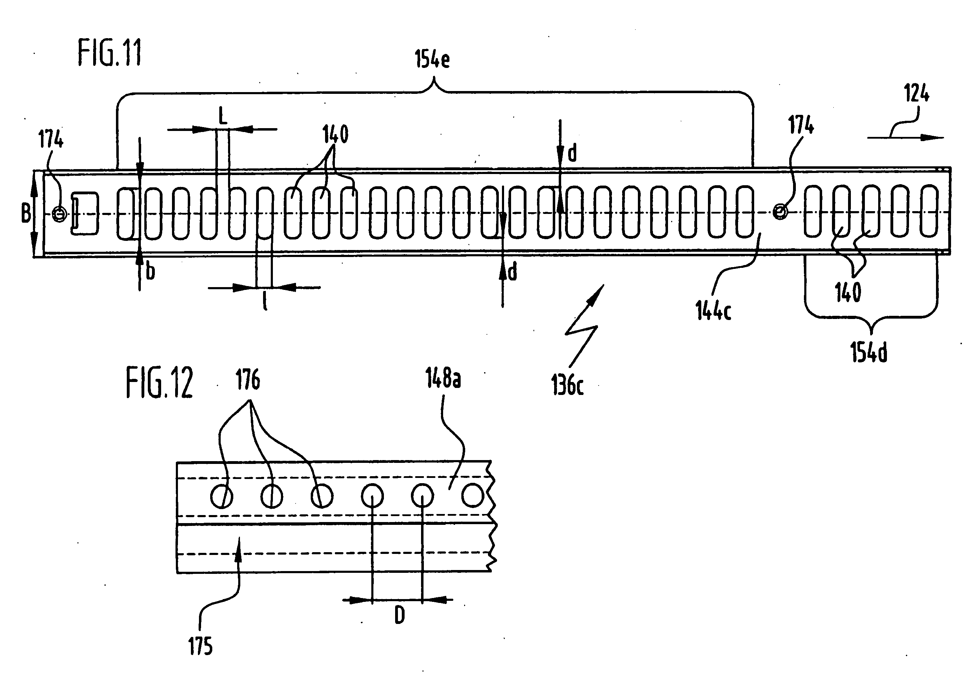

Diese Auszugsführung 122 umfaßt eine korpusseitige Führungsschiene 136a (siehe insbesondere Fig. 7), eine auszugsseitige Führungsschiene 136c (siehe insbesondere Fig. 11) und eine zwischen der korpusseitigen Führungsschiene 136a und der auszugsseitigen Führungsschiene 136c angeordnete mittlere Führungsschiene 136b (siehe insbesondere Fig. 9).

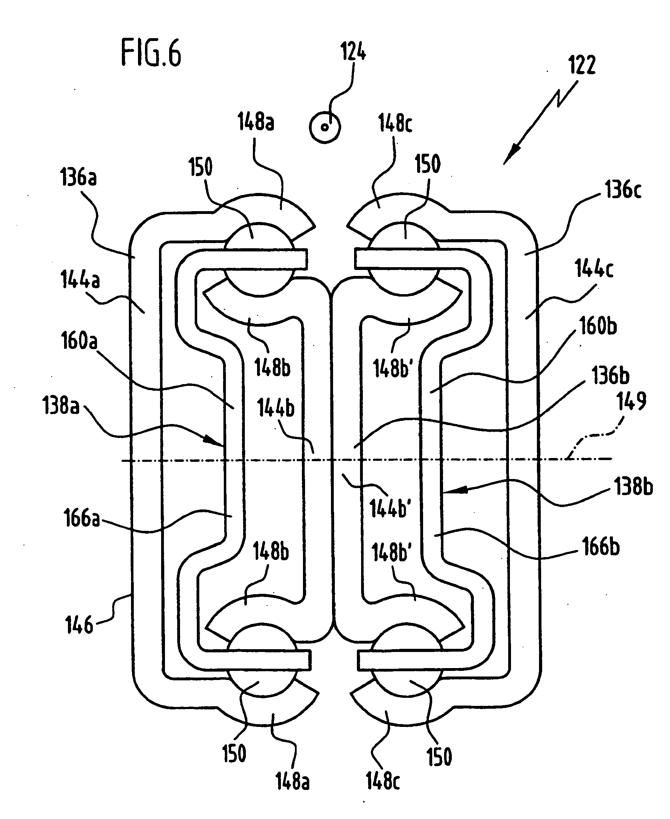

Wie am besten aus den Fig. 5 und 6 zu ersehen ist, ist die mittlere Führungsschiene 136b mittels einer ersten Wälzkörperanordnung 138a an der korpusseitigen Führungsschiene 136a längs der Auszugsrichtung 124 verschieblich geführt.

Die auszugsseitige Führungsschiene 136c ist mittels einer zweiten Wälzkörperanordnung 138b an der mittleren Führungsschiene 136b längs der Auszugsrichtung 124 verschieblich geführt.

Die korpusseitige Führungsschiene 136a ist in den Fig. 6 und 7 im einzelnen dargestellt.

Sie umfaßt einen Schienenrücken 144a, mit dessen ebener Außenseite 146 die korpusseitige Führungsschiene 136a im montierten Zustand flächig an einer der Seitenwände 110 des Korpus 106 anliegt.

Vom unteren Rand bzw. vom oberen Rand des Schienenrückens 144a erstreckt sich jeweils eine Wälzkörperlaufbahn 148a weg, welche (von der Längsmittelebene 149 der korpusseitigen Führungsschiene 136a aus gesehen) konkav gekrümmt ist, um den als Kugeln ausgebildeten Wälzkörpern 150 der ersten Wälzkörperanordnung 138a eine Anlagefläche und eine seitliche Führung zu geben.

Wie aus Fig. 7 zu ersehen ist, ist der Schienenrücken 144a mit verschiedenen Befestigungslöchern 152 versehen, welche der Befestigung der korpusseitigen Führungsschiene 136a, insbesondere dem Durchtritt von Befestigungsmitteln (beispielsweise Schrauben) durch den Schienenrücken 144a hindurch, dienen.

Außerdem ist der Schienenrücken 144a mit einem Anschlag 153 versehen, der mit einem Wälzkörperkäfig 166a der ersten Wälzkörperanordnung 138a zusammenwirkt, um den Verschiebungsweg der ersten Wälzkörperanordnung 138a relativ zu der korpusseitigen Führungsschiene 136a zu begrenzen.

Ferner ist der Schienenrücken 144a der korpusseitigen Führungsschiene 136a in einem ersten Teilabschnitt 154a, der sich in der Auszugsrichtung 124 über ungefähr ein Drittel der Länge der korpusseitigen Führungsschiene 136a erstreckt, und in einem zweiten Teilabschnitt 154b, welcher sich ebenfalls längs der Auszugsrichtung 124 über ungefähr ein Drittel der Länge der korpusseitigen Führungsschiene 136a erstreckt, mit einer Vielzahl von Fluiddurchtrittsöffnungen 140 versehen, welche dem Eintreten und dem Austreten von Flüssigkeit durch die korpusseitige Führungsschiene 136a im Betrieb der Vorrichtung 100 dienen.

Die Fluiddurchtrittsöffnungen 140 der korpusseitigen Führungsschiene 136a sind alle im wesentlichen kongruent zueinander ausgebildet, folgen längs der Auszugsrichtung 124 aufeinander und sind in der Auszugsrichtung 124 voneinander beabstandet.

Jede der Fluiddurchtrittsöffnungen 140 ist im wesentlichen rechteckig ausgebildet, mit abgerundeten Eckbereichen.

In einem konkreten Ausführungsbeispiel beträgt die Ausdehnung 1 jeder der Fluiddurchtrittsöffnungen 140 längs der Auszugsrichtung 124 ungefähr 5 mm, während die Ausdehnung b jeder der Fluiddurchtrittsöffnungen 140 senkrecht zur Auszugsrichtung 124 ungefähr 16 mm beträgt. Die gesamte Breite B des Schienenrückens 144a beträgt ungefähr 28 mm, und die Breite L des Steges 156 zwischen zwei aufeinanderfolgenden Fluiddurchtrittsöffnungen 140, d.h. dessen Ausdehnung längs der Auszugsrichtung 124, beträgt ungefähr 5 mm.

Daraus ergibt sich, daß der Flächenanteil der Fluiddurchtrittsöffnungen 140 an der gesamten Fläche des Schienenrückens 144a (einschließlich der Flächen der Fluiddurchtrittsöffnungen 140) in den beiden Teilabschnitten 154a, 154b jeweils ungefähr 29 % beträgt.

Der Abstand d des unteren Randes jeder Fluiddurchtrittsöffnung 140 von dem unteren Rand des Schienenrückens 144a bzw. des oberen Randes jeder der Fluiddurchtrittsöffnungen 140 von dem oberen Rand des Schienenrückens 144a beträgt ungefähr 5 mm, das heißt ungefähr 18 % der Breite B des Schienenrückens 144a.

Die Wälzkörper 150, welche an den Wälzkörperlaufbahnen 148a der korpusseitigen Führungsschiene 136a abrollen, sind in jeweils einem Aufnahmeloch einer oberen bzw. einer unteren Wälzkörperhalteleiste 158 gehalten, wobei sich beide Wälzkörperhalteleisten 158 parallel zueinander und zur Auszugsrichtung 124 erstrecken (siehe Fig. 8).

Beide Wälzkörperhalteleisten 158 sind mittels eines Käfigrückens 160a miteinander verbunden, welcher einen sich längs der Auszugsrichtung 124 erstreckenden Teilabschnitt 162a aufweist, der mit einer Vielzahl von Fluiddurchtrittsöffnungen 164 versehen ist.

Die Fluiddurchtrittsöffnungen 164 sind im wesentlichen kongruent miteinander ausgebildet, folgen längs der Auszugsrichtung 124 aufeinander und sind in der Auszugsrichtung 124 voneinander beabstandet.

Jede der Fluiddurchtrittsöffnungen 164 weist im wesentlichen die Form eines Rechtecks mit an zwei einander gegenüberliegenden Seiten angesetzten Kreissegmenten auf.

In einem konkreten Ausführungsbeispiel beträgt die Ausdehnung l' jeder Fluiddurchtrittsöffnung 164 längs der Auszugsrichtung 124 ungefähr 8 mm, während die maximale Ausdehnung b' jeder Fluiddurchtrittsöffnung 164 senkrecht zur Auszugsrichtung 124 ungefähr 12 mm beträgt. Die Breite B' des Käfigrückens 160a beträgt ungefähr 22 mm, während die Breite des Steges 166 zwischen zwei in der Auszugsrichtung 124 aufeinanderfolgenden Fluiddurchtrittsöffnungen 164 ungefähr 2 mm beträgt.

Der Flächenanteil der Fluiddurchtrittsöffnungen 164 an der Gesamtfläche des Käfigrückens 160a in dem Teilabschnitt 162a beträgt ungefähr 38 %.

Der Käfigrücken 160a bildet zusammen mit den beiden Wälzkörperhalteleisten 158 den Wälzkörperkäfig 166a der ersten Wälzkörperanordnung 138a.

Wie aus dem Querschnitt der Fig. 6 zu ersehen ist, rollen die Wälzkörper 150 der ersten Wälzkörperanordnung 138a auch an zwei Wälzkörperlaufbahnen 148b der mittleren Führungsschiene 136b ab, welche jeweils einer der Wälzkörperlaufbahnen 148a der korpusseitigen Führungsschiene 136a gegenüberliegen.

Die beiden Wälzkörperlaufbahnen 148b sind durch einen Schienenrücken 144b miteinander verbunden.

Die mittlere Führungsschiene 136b umfaßt ferner einen weiteren Schienenrücken 144b', welcher mit seiner ebenen Außenseite an der ebenen Außenseite des Schienenrückens 144b anliegt und an diesem, beispielsweise durch Verschweißung, festgelegt ist.

Von dem unteren bzw. dem oberen Rand des Schienenrückens 144b' erstreckt sich jeweils eine Wälzkörperlaufbahn 148b' in der den Wälzkörperlaufbahnen 148b entgegengesetzten Richtung.

Die Wälzkörperlaufbahnen 148b' sind (von der Längsmittelebene 149 der mittleren Führungsschiene 136b aus gesehen) konvex gewölbt, um eine Anlagefläche und eine seitliche Führung für die Wälzkörper 150 der zweiten Wälzkörperanordnung 138b zu bilden.

Wie aus Fig. 9 zu ersehen ist, steht der Schienenrücken 144b' in der Auszugsrichtung 124 nach vorne über den Schienenrücken 144b über.

Der Schienenrücken 144b ist in einem Teilabschnitt 154c, der sich über nahezu die gesamte Länge des Schienenrückens 144b erstreckt, mit einer Vielzahl von Fluiddurchtrittsöffnungen 140 versehen, die längs der Auszugsrichtung 124 aufeinanderfolgen und in der Auszugsrichtung 124 voneinander beabstandet sind.

Die Fluiddurchtrittsöffnungen 140 in dem Schienenrücken 144b sind alle im wesentlichen kongruent miteinander ausgebildet und weisen eine im wesentlichen rechteckige Form mit abgerundeten Ecken auf.

Bei einem konkreten Ausführungsbeispiel beträgt die Ausdehnung I jeder der Fluiddurchtrittsöffnungen 140 in der Auszugsrichtung 124 ungefähr 5 mm, während die Ausdehnung b jeder der Fluiddurchtrittsöffnungen 140 senkrecht zur Auszugsrichtung 124 ungefähr 10 mm beträgt. Die Breite B des Schienenrückens 144b beträgt ungefähr 18 mm, während die Breite L des Steges 156 zwischen jeweils zwei in der Auszugsrichtung 124 aufeinanderfolgenden Fluiddurchtrittsöffnungen 140, das heißt die Ausdehnung des Steges 156 in der Auszugsrichtung 124, ungefähr 5 mm beträgt. Daraus ergibt sich, daß der Flächenanteil der Fluiddurchtrittsöffnungen 140 an der Gesamtfläche des Schienenrückens 144b in dem Teilabschnitt 154c ungefähr 28 % beträgt.

Der Abstand d des unteren Randes jeder Fluiddurchtrittsöffnung 140 von dem unteren Rand des Schienenrückens 144b bzw. des oberen Randes jeder der Fluiddurchtrittsöffnungen 140 von dem oberen Rand des Schienenrückens 144b beträgt ungefähr 4 mm, das heißt ungefähr 22 % der Breite B des Schienenrückens 144b.

Neben den Fluiddurchtrittsöffnungen 140 ist der Schienenrücken 144b in seinem hinteren Endbereich mit einem Anschlag 168 versehen, welcher mit dem Wälzkörperkäfig 166a der ersten Wälzkörperanordnung 138a zusammenwirkt, um den Verschiebeweg der mittleren Führungsschiene 136b relativ zu der ersten Wälzkörperanordnung 138a zu begrenzen.

Der Schienenrücken 144b' ist spiegelsymmetrisch zum Schienenrücken 144b ausgebildet und somit ebenfalls mit Fluiddurchtrittsöffnungen 140 und einem Anschlag 168' versehen, welcher mit einem Wälzkörperkäfig 166b der zweiten Wälzkörperanordnung 138b zusammenwirkt, um den Verschiebeweg der zweiten Wälzkörperanordnung 138b relativ zu der mittleren Führungsschiene 136b zu begrenzen.

Die beiden Schienenrücken 144b, 144b' der mittleren Führungsschiene 136b sind so aneinander festgelegt, daß die Fluiddurchtrittsöffnungen 140 des Schienenrückens 144b in dem Überlappungsbereich beider Schienenrücken 144b, 144b' mit jeweils einer Fluiddurchtrittsöffnung 140 des Schienenrückens 144b' fluchten.

Die Wälzkörper 150 der zweiten Wälzkörperanordnung 138b sind als Kugeln ausgebildet und in Wälzkörperaufnahmeöffnungen zweier Wälzkörperhalteleisten 158 (siehe Fig. 10) aufgenommen, welche durch einen Käfigrücken 160b miteinander verbunden sind und zusammen mit demselben den Wälzkörperkäfig 166b der zweiten Wälzkörperanordnung 138 bilden.

Der Käfigrücken 160b ist in einem Teilabschnitt 162b, der sich über nahezu die gesamte Länge des Käfigrückens 160b erstreckt, mit einer Vielzahl von Fluiddurchtrittsöffnungen 164 versehen, welche im wesentlichen kongruent miteinander ausgebildet sind, längs der Auszugsrichtung 124 aufeinanderfolgen und in der Auszugsrichtung 124 voneinander beabstandet sind.

In einem konkreten Ausführungsbeispiel sind die Fluiddurchtrittsöffnungen 164 des Käfigrückens 160b der zweiten Wälzkörperanordnung 138b genauso dimensioniert und um dieselbe Strecke L' voneinander beabstandet wie die Fluiddurchtrittsöffnungen 164 des Käfigrückens 160a der ersten Wälzkörperanordnung 138a. Bei dieser konkreten Ausführungsform weist auch der Käfigrücken 160b dieselbe Breite B' auf wie der Käfigrücken 160a der ersten Wälzkörperanordnung 138a, so daß auch der Flächenanteil der Fluiddurchtrittsöffnungen 164 an der Gesamtfläche des Käfigrückens 160b in dem Teilabschnitt 162b gleich groß ist wie in dem Teilabschnitt 162a des Käfigrückens 160a der ersten Wälzkörperanordnung 138a.

Die auszugsseitige Führungsschiene 136c umfaßt, wie am besten aus Fig. 6 zu ersehen ist, zwei Wälzkörperlaufbahnen 148c, welche jeweils einer der Wälzkörperlaufbahnen 148b' der mittleren Führungsschiene 136b gegenüberliegen und (von der Längsmittelebene 149 der auszugsseitigen Führungsschiene 136c aus gesehen) konkav ausgebildet sind, so daß die Wälzkörperlaufbahnen 148c der auszugsseitigen Führungsschiene 136c den Wälzkörpern 150 der zweiten Wälzkörperanordnung 138b eine Anlagefläche und eine seitliche Führung bieten.

Die Wälzkörperlaufbahnen 148c sind durch einen Schienenrücken 144c .. miteinander verbunden.

Wie aus Fig. 11 zu ersehen ist, ist der Schienenrücken 144c mit Befestigungslöchern 174 versehen, welche dazu dienen, Befestigungsmittel aufzunehmen, mittels welcher der Auszug 120 mit der auszugsseitigen Führungsschiene 136c verbindbar ist.

Ferner weist der Schienenrücken 144c zwei Teilabschnitte 154d und 154e auf, welche sich längs der Auszugsrichtung 124 erstrecken, und zwar über ungefähr ein Sechstel bzw. über ungefähr zwei Drittel der Länge des Schienenrückens 144c.

Jeder der Teilabschnitte 154d, 154e des Schienenrückens 154c weist eine Vielzahl von Fluiddurchtrittsöffnungen 140 auf, welche im wesentlichen kongruent miteinander ausgebildet sind, längs der Auszugsrichtung 124 aufeinanderfolgen und in der Auszugsrichtung 124 voneinander beabstandet sind.

Bei einem konkreten Ausführungsbeispiel sind die Fluiddurchtrittsöffnungen 140 des Schienenrückens 144c genauso dimensioniert und um dieselbe Strecke L in der Auszugsrichtung 124 voneinander beabstandet wie die Fluiddurchtrittsöffnungen 140 des Schienenrückens 144a der korpusseitigen Führungsschiene 136a. Da bei diesem konkreten Ausführungsbeispiel die Breite B des Schienenrückens 144c mit der Breite B des Schienenrückens 144a der korpusseitigen Führungsschiene 136a übereinstimmt, ist auch der Flächenanteil der Fluiddurchtrittsöffnungen 140 an der gesamten Fläche des Schienenrückens 144c in den Teilabschnitten 154d und 154e des Schienenrückens 144c gleich groß wie in den Teilabschnitten 154a und 154b des Schienenrückens 144a der korpusseitigen Führungsschiene 136a.

Auch der Abstand d zwischen dem oberen Rand bzw. dem unteren Rand jeder Fluiddurchtrittsöffnung 140 und dem oberen Rand bzw. dem unteren Rand des Schienenrückens 144c ist bei diesem Ausführungsbeispiel gleich groß wie bei den Fluiddurchtrittsöffnungen 140 der korpusseitigen Führungsschiene 136a.

Die Führungsschienen 136a, 136b und 136c werden vorzugsweise aus einem rostfreien Edelstahlmaterial hergestellt, welches den Vorteil einer erhöhten Korrosionsresistenz beim Einsatz von schmutzlösenden Spülmittelzusätzen in der im Innenraum 104 der Kammer 102 verwendeten Flüssigkeit bietet. Außerdem verringert dieses Material die Anfälligkeit gegenüber an der Auszugsführung 122 verbleibenden Spülresten, insbesondere gegenüber sauren oder basischen Lebensmittelresten oder ähnlichem.

Auch die Wälzkörperkäfige 166a, 166b und die Wälzkörper 150 werden aus den genannten Gründen vorzugsweise aus einem rostfreien Edelstahlmaterial hergestellt.

Die Radien der kugelförmigen Wälzkörper 150 einerseits und die Krümmungsradien der Wälzkörperlaufbahnen 148a, 148b, 148b' und 148c andererseits werden vorzugsweise so aufeinander abgestimmt, daß jeder Wälzkörper 150 jede ihm zugeordnete Wälzkörperlaufbahn nicht längs einer Linie, sondern jeweils nur an einem Punkt berührt.

Durch diese Ein-Punkt-Auflage der Wälzkörper 150 an den Wälzkörperlaufbahnen entsteht ein Schneepflug-Effekt, das heißt jeder Wälzkörper 150 furcht durch eventuell an den Wälzkörperlaufbahnen vorhandene Ablagerungen hindurch und verdrängt diese Ablagerungen zur Seite hin aus der betreffenden Wälzkörperlaufbahn heraus. Auf diese Weise wird eine Beeinträchtigung der Laufqualität der Wälzkörperanordnungen 138a, 138b durch eventuell an den Auszugsführungen 122 vorhandene Schmutzablagerungen verhindert.

Die Fluiddurchtrittsöffnungen 140, 164 in den Führungsschienen bzw. den Wälzkörperkäfigen können durch jedes geeignete Trennverfahren, insbesondere durch Ausstanzen oder durch Laserschneiden, hergestellt werden.

Bei einer Variante der vorstehend beschriebenen Auszugsführung 122 zur Verwendung in der Vorrichtung 100 kann vorgesehen sein, daß die Wälzkörperlaufbahnen 148a, 148b, 148b' und/oder 148c in ihren jeweiligen Endbereichen 175 jeweils mit einer oder mit mehreren Fluiddurchtrittsöffnungen 176 versehen sind, welche einen Ablauf von Restflüssigkeit von der jeweiligen Wälzkörperlaufbahn ermöglichen.

Außerdem können diese Durchtrittsöffnungen im Endbereich einer Wälzkörperlaufbahn dazu dienen, einen gewissen Rasteffekt für einen oder mehrere Wälzkörper 150 in einer ausgezogenen Stellung der Auszugsführung 122 zu erzielen. Zu diesem Zweck sind die Fluiddurchtrittsöffnungen 176 in dem Endbereich 175 der betreffenden Wälzkörperlaufbahn im wesentlichen kreisförmig ausgebildet und in einem Abstand D voneinander angeordnet, welcher dem Abstand zweier Wälzkörper 150 an einem der Wälzkörperkäfige 166a, 166b entspricht.

Eine Draufsicht auf einen solchen Endbereich 175 mit Fluiddurchtrittsöffnungen 176 ist am Beispiel der Wälzkörperlaufbahn 148a der korpusseitigen Führungsschiene 136a in Fig. 12 dargestellt.

## Patentansprüche

1. Vorrichtung mit einer Kammer (102), deren Innenraum (104) im Betrieb der Vorrichtung (100) zumindest zeitweise von einer Flüssigkeit oder einem unter erhöhtem Druck stehenden Gas durchströmt wird, umfassend mindestens einen Auszug (120) und mindestens eine Auszugsführung (122), mittels welcher der Auszug (120) längs einer Auszugsrichtung (124) verschiebbar an einem Korpus (106) der Kammer (102) gehalten ist,
**dadurch gekennzeichnet, daß** die Auszugsführung (122) mindestens eine auszugsseitige Führungsschiene (136c) und eine korpusseitige Führungsschiene (136a) und mindestens eine Wälzkörperanordnung (138a, 138b) umfaßt, mittels welcher eine der Führungsschienen an einer anderen Führungsschiene der Auszugsführung (122) längs der Auszugsrichtung (124) verschieblich geführt ist und welche einen Wälzkörperkäfig (166a, 166b) umfaßt, wobei
- mindestens eine der Führungsschienen (136a, 136b, 136c) der Auszugsführung (122) einen Schienenrücken (144a, 144b, 144c) umfaßt, der zumindest einen sich längs der Auszugsrichtung (124) erstreckenden Teilabschnitt (154a, 154b, 154c, 154d, 154e) umfaßt, welcher so mit Fluiddurchtrittsöffnungen (140) versehen ist, daß die betreffende Führungsschiene (136a, 136b, 136c) im Betrieb der Vorrichtung (100) von der Flüssigkeit bzw. von dem Gas durchströmbar ist, und/oder
- mindestens ein Wälzkörperkäfig (166a, 166b) der Auszugsführung (122) einen Käfigrücken (160a, 160b) umfaßt, der zumindest einen sich längs der Auszugsrichtung (124) erstreckenden Teilabschnitt (162a, 162b) umfaßt, welcher so mit Fluiddurchtrittsöffnungen (164) versehen ist, daß der Wälzkörperkäfig (166a, 166b) im Betrieb der Vorrichtung (100) von der Flüssigkeit bzw. von dem Gas durchströmbar ist.

2. Vorrichtung nach Anspruch 1, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) mindestens ungefähr 20 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) mindestens ungefähr 20 % beträgt.

3. Vorrichtung nach Anspruch 2, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) mindestens ungefähr 25 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) mindestens ungefähr 25 % beträgt.

4. Vorrichtung nach Anspruch 3, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) mindestens ungefähr 30 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) mindestens ungefähr 30 % beträgt.

5. Vorrichtung nach Anspruch 4, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) mindestens ungefähr 40 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) mindestens ungefähr 40 % beträgt.

6. Vorrichtung nach einem der Ansprüche 1 bis 5, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) höchstens ungefähr 90 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) höchstens ungefähr 90 % beträgt.

7. Vorrichtung nach Anspruch 6, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) höchstens ungefähr 80 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) höchstens ungefähr 80 % beträgt.

8. Vorrichtung nach einem der Ansprüche 1 bis 7, **dadurch gekennzeichnet, daß** sich mindestens einer der mit Fluiddurchtrittsöffnungen (140, 164) versehenen Teilabschnitte (154a, 154b, 154c, 154d, 154e, 162a, 162b) über mindestens ein Drittel der Länge des Schienenrückens (144a, 144b, 144b', 144c) bzw. des Käfigrückens (160a, 160b) erstreckt.

9. Vorrichtung nach einem der Ansprüche 1 bis 8, **dadurch gekennzeichnet, daß** die Summe der Längen der mit Fluiddurchtrittsöffnungen (140, 164) versehenen Teilabschnitte (154a, 154b, 154c, 154d, 154e, 162a, 162b) größer ist als ungefähr zwei Drittel der gesamten Länge des Schienenrückens (144a, 144b, 144b', 144c) bzw. des Käfigrückens (160a, 160b).

10. Vorrichtung nach einem der Ansprüche 1 bis 9, **dadurch gekennzeichnet, daß** mindestens ein Teilabschnitt (154a, 154b, 154c, 154d, 154e) einer Führungsschiene (136a, 136b, 136c) der Auszugsführung (122) Fluiddurchtrittsöffnungen (140) aufweist, deren seitlicher Abstand von mindestens einem der seitlichen Ränder des Schienenrückens (144a, 144b, 144b', 144c) der betreffenden Führungsschiene kleiner ist als ungefähr ein Viertel der Breite des Schienenrückens (144a, 144b, 144b', 144c).

11. Vorrichtung nach einem der Ansprüche 1 bis 10, **dadurch gekennzeichnet, daß** der betreffende Teilabschnitt (154a, 154b, 154c, 154d, 154e, 162a, 162b) des Schienenrückens (144a, 144b, 144b', 144c) bzw. des Käfigrückens (160a, 160b) mindestens drei im wesentlichen kongruente Fluiddurchtrittsöffnungen (140, 164) aufweist.

12. Vorrichtung nach einem der Ansprüche 1 bis 11, **dadurch gekennzeichnet, daß** jede der Fluiddurchtrittsöffnungen (140) des Schienenrückens (144a, 144b, 144b', 144c) bzw. des Käfigrückens (160a, 160b) in mindestens einer Erstreckungsrichtung eine Ausdehnung von höchstens ungefähr 5 mm aufweist.

13. Vorrichtung nach einem der Ansprüche 1 bis 12, **dadurch gekennzeichnet, daß** jede der Fluiddurchtrittsöffnungen (140, 164) des Schienenrückens (144a, 144b, 144b', 144c) bzw. des Käfigrückens (160a, 160b) längs der Auszugsrichtung (124) eine Ausdehnung von höchstens ungefähr 5 mm aufweist.

14. Vorrichtung nach einem der Ansprüche 1 bis 13, **dadurch gekennzeichnet, daß** mindestens eine Führungsschiene (136a, 136b, 136c) der Auszugsführung (122) und mindestens ein Wälzkörperkäfig (166a, 166b) derselben Auszugsführung (122) mit Fluiddurchtrittsöffnungen (140, 164) versehen sind.

15. Vorrichtung nach Anspruch 14, **dadurch gekennzeichnet, daß** in einem vollständig in den Innenraum (104) der Kammer (102) eingeschobenen Zustand der Auszugsführung (122) mindestens eine Fluiddurchtrittsöffnung (140) des Führungsschiene (136a, 136b, 136c) und mindestens eine Fluiddurchtrittsöffnung (164) des Wälzkörperkäfigs (166a, 166b) miteinander fluchten.

16. Vorrichtung nach Anspruch 15, **dadurch gekennzeichnet, daß** im vollständig in den Innenraum (104) der Kammer (102) eingeschobenen Zustand der Auszugsführung (122) mehrere Fluiddurchtrittsöffnungen (140) der Führungsschiene (136a, 136b, 136c) mit jeweils einer Fluiddurchtrittsöffnung (164) des Wälzkörperkäfigs (166a, 166b) fluchten.

17. Vorrichtung nach Anspruch 16, **dadurch gekennzeichnet, daß** im vollständig in den Innenraum (104) der Kammer (102) eingeschobenen Zustand der Auszugsführung (122) im wesentlichen alle Fluiddurchtrittsöffnungen (140) der Führungsschiene (136a, 136b, 136c) mit jeweils einer Fluiddurchtrittsöffnung (164) des Wälzkörperkäfigs (166a, 166b) fluchten.

18. Vorrichtung nach einem der Ansprüche 1 bis 17, **dadurch gekennzeichnet, daß** mindestens eine Führungsschiene (136a, 136b, 136c) der Auszugsführung (122) eine Wälzkörperlaufbahn (148a, 148b, 148b', 148c) umfaßt, die mit mindestens einer Fluiddurchtrittsöffnung (176) versehen ist.

19. Vorrichtung nach einem der Ansprüche 1 bis 18, **dadurch gekennzeichnet, daß** mindestens eine Wälzkörperanordnung (138a, 138b) der Auszugsführung (122) als Kugeln ausgebildete Wälzkörper (150) umfaßt.

20. Vorrichtung nach einem der Ansprüche 1 bis 19, **dadurch gekennzeichnet, daß** mindestens eine Wälzkörperanordnung (138a, 138b) der Auszugsführung (122) Wälzkörper (150) umfaßt, die jeweils in Ein-Punkt-Kontakt mit einer Wälzkörperlaufbahn (148a, 148b, 148b', 148c) einer den Wälzkörpern zugeordneten Führungsschiene (136a, 136b, 136c) der Auszugsführung (122) stehen.

21. Vorrichtung nach einem der Ansprüche 1 bis 20, **dadurch gekennzeichnet, daß** die Auszugsführung (122) neben der auszugsseitigen Führungsschiene (136c) und der korpusseitigen Führungsschiene (136a) mindestens eine weitere Führungsschiene (136b) umfaßt, die zwischen der auszugsseitigen Führungsschiene (136c) und der korpusseitigenFührungsschiene (136a) angeordnet ist.

22. Vorrichtung nach einem der Ansprüche 1 bis 21, **dadurch gekennzeichnet, daß** die Auszugsführung (122) als Vollauszugsführung ausgebildet ist, mittels welcher der Auszug (120) im wesentlichen vollständig aus dem Innenraum (104) der Kammer (102) herausziehbar ist.

23. Vorrichtung nach einem der Ansprüche 1 bis 22, **dadurch gekennzeichnet, daß** die Vorrichtung (100) als eine Spülmaschine oder als eine Waschmaschine ausgebildet ist.

24. Verwendung einer Auszugsführung (122), die mindestens eine auszugsseitige Führungsschiene (136c) und eine korpusseitige Führungsschiene (136a) und mindestens eine Wälzkörperanordnung (138a, 138b) umfaßt, mittels welcher eine der Führungsschienen an einer anderen Führungsschiene der Auszugsführung (122) längs einer Auszugsrichtung (124) verschleblich geführt ist und welche einen Wälzkörperkäfig 166a, 166b umfaßt, wobei
- mindestens eine der Führungsschienen (136a, 136b, 136c) der Auszugsführung (122) einen Schienenrücken (144a, 144b, 144b', 144c) umfaßt, der zumindest einen sich längs der Auszugsrichtung (124) erstreckenden Teilabschnitt (154a, 154b, 154c, 154d, 154e) umfaßt, welcher so mit Fluiddurchtrittsöffnungen (140) versehen ist, daß die Führungsschiene (136a, 136b, 136c) von einer Flüssigkeit oder von einem Gas durchströmbar ist, und/oder
- mindestens ein Wälzkörperkäfig (166a, 166b) der Auszugsführung (122) einen Käfigrücken (160a, 160b) umfaßt, der zumindest einen sich längs der Auszugsrichtung (124) erstreckenden Teilabschnitt (162a, 162b) umfaßt, welcher so mit Fluiddurchtrittsöffnungen (164) versehen ist, daß der Wälzkörperkäfig (166a, 166b) von einer Flüssigkeit oder von einem Gas durchströmbar ist,
zum verschiebbaren Halten eines Auszugs (120) an einem Korpus (106) einer Kammer (102) in einer Vorrichtung (100), deren Innenraum (104) im Betrieb der Vorrichtung (100) zumindest zeitweise von einer Flüssigkeit oder von einem unter einem erhöhten Druck stehenden Gas durchströmt wird.

25. Verwendung nach Anspruch 24, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) mindestens ungefähr 20 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) mindestens ungefähr 20 % beträgt.

26. Verwendung nach einem der Ansprüche 24 oder 25, **dadurch gekennzeichnet, daß**
- der Flächenanteil der Fluiddurchtrittsöffnungen (140) der Führungsschiene (136a, 136b, 136c) an der gesamten Fläche des Schienenrückens (144a, 144b, 144b', 144c) in dem Teilabschnitt (154a, 154b, 154c, 154d, 154e) höchstens ungefähr 90 % beträgt, und/oder
- der Flächenanteil der Fluiddurchtrittsöffnungen (164) des Wälzkörperkäfigs (166a, 166b) an der gesamten Fläche des Käfigrückens (160a, 160b) in dem Teilabschnitt (162a, 162b) höchstens ungefähr 90 % beträgt.

27. Verwendung nach einem der Ansprüche 24 bis 26, **dadurch gekennzeichnet, daß** sich mindestens einer der mit Fluiddurchtrittsöffnungen (140, 164) versehenen Teilabschnitte (154a, 154b, 154c, 154d, 154e, 162a, 162b) über mindestens ein Drittel der Länge des Schienenrückens (144a, 144b, 144b', 144c) bzw. des Käfigrückens (160a, 160b) erstreckt.

28. Verwendung nach einem der Ansprüche 24 bis 27, **dadurch gekennzeichnet, daß** die Summe der Längen der mit Fluiddurchtrittsöffnungen (140, 164) versehenen Teilabschnitte (154a, 154b, 154c, 154d, 154e, 162a, 162b) größer ist als ungefähr zwei Drittel der gesamten Länge des Schienenrückens (144a, 144b, 144b', 144c) bzw. des Käfigrückens (160a, 160b).

29. Verwendung nach einem der Ansprüche 24 bis 28, **dadurch gekennzeichnet, daß** mindestens ein Teilabschnitt (154a, 154b, 154c, 154d, 154e) einer Führungsschiene (136a, 136b, 136c) der Auszugsführung (122) Fluiddurchtrittsöffnungen (140) aufweist, deren seitlicher Abstand von mindestens einem der seitlichen Ränder des Schienenrückens (144a, 144b, 144b', 144c) der betreffenden Führungsschiene kleiner ist als ungefähr ein Viertel der Breite des Schienenrückens (144a, 144b, 144b', 144c).

30. Verwendung nach einem der Ansprüche 24 bis 29, **dadurch gekennzeichnet, daß** der betreffende Teilabschnitt (154a, 154b, 154c, 154d, 154e, 162a, 162b) des Schienenrückens (144a, 144b, 144b', 144c) bzw. des Käfigrückens (160a, 160b) mindestens drei im wesentlichen kongruente Fluiddurchtrittsöffnungen (140, 164) aufweist.

31. Verwendung nach einem der Ansprüche 24 bis 30, **dadurch gekennzeichnet, daß** jede der Fluiddurchtrittsöffnungen (140) des Schienenrückens (144a, 144b, 144b', 144c) bzw. des Käfigrückens (160a, 160b) in mindestens einer Erstreckungsrichtung eine Ausdehnung von höchstens ungefähr 5 mm aufweist.

32. Verwendung nach einem der Ansprüche 24 bis 31, **dadurch gekennzeichnet, daß** jede der Fluiddurchtrittsöffnungen (140, 164) des Schienenrückens (144a, 144b, 144b', 144c) bzw. des Käfigrückens (160a, 160b) längs der Auszugsrichtung (124) eine Ausdehnung von höchstens ungefähr 5 mm aufweist.

33. Verwendung nach einem der Ansprüche 24 bis 32, **dadurch gekennzeichnet, daß** mindestens eine Führungsschiene (136a, 136b, 136c) der Auszugsführung (122) und mindestens ein Wälzkörperkäfig (166a, 166b) derselben Auszugsführung (122) mit Fluiddurchtrittsöffnungen (140, 164) versehen sind.

34. Verwendung nach Anspruch 33, **dadurch gekennzeichnet, daß** im vollständig in den Innenraum (104) der Kammer (102) eingeschobenen Zustand der Auszugsführung (122) mindestens eine Fluiddurchtrittsöffnung (140) des Führungsschiene (136a, 136b, 136c) und mindestens eine Fluiddurchtrittsöffnung (164) des Wälzkörperkäfigs (166a, 166b) miteinander fluchten.

35. Verwendung nach einem der Ansprüche 24 bis 34, **dadurch gekennzeichnet, daß** mindestens eine Führungsschiene (136a, 136b, 136c) der Auszugsführung (122) eine Wälzkörperlaufbahn (148a, 148b, 148b', 148c) umfaßt, die mit mindestens einer Fluiddurchtrittsöffnung (176) versehen ist.

36. Verwendung nach einem der Ansprüche 24 bis 35, **dadurch gekennzeichnet, daß** mindestens eine Wälzkörperanordnung (138a, 138b) der Auszugsführung (122) als Kugeln ausgebildete Wälzkörper (150) umfaßt.

37. Verwendung nach einem der Ansprüche 24 bis 36, **dadurch gekennzeichnet, daß** mindestens eine Wälzkörperanordnung (138a, 138b) der Auszugsführung (122) Wälzkörper (150) umfaßt, die jeweils in Ein-Punkt-Kontakt mit einer Wälzkörperlaufbahn (148a, 148b, 148b', 148c) einer den Wälzkörpern zugeordneten Führungsschiene (136a, 136b, 136c) der Auszugsführung (122) stehen.

38. Verwendung nach einem der Ansprüche 24 bis 37, **dadurch gekennzeichnet, daß** die Auszugsführung (122) neben der auszugsseitigen Führungsschiene (136c) und der korpusseitigen Führungsschiene (136a) mindestens eine weitere Führungsschiene (136b) umfaßt, die zwischen der auszugsseitigen Führungsschiene (136c) und der korpusseitigen Führungsschiene (136a) angeordnet ist.

39. Verwendung nach einem der Ansprüche 24 bis 38, **dadurch gekennzeichnet, daß** die Auszugsführung (122) als Vollauszugsführung ausgebildet ist, mittels welcher der Auszug (120) im wesentlichen vollständig aus dem Innenraum (104) der Kammer (102) herausziehbar ist.

40. Verwendung nach einem der Ansprüche 24 bis 39, **dadurch gekennzeichnet, daß** die Vorrichtung (100) als eine Spülmaschine oder als eine Waschmaschine ausgebildet ist.

## Claims

1. A device incorporating a chamber (102) through the interior (104) of which, at least on occasion, there is a flow of liquid or of a gas at an enhanced pressure when the device (100) is in operation, comprising at least one drawer (120) and at least one drawer guide (122) by means of which the drawer (120) is held on a corpus (106) of the chamber (102) such that it is displaceable in a direction of movement of the drawer (124), **characterized in that**
the drawer guide (122) comprises at least one guide rail (136c) at the drawer side and one guide rail (136a) at the corpus side and at least one rolling member assembly (138a, 138b) by means of which one of the guide rails is guided in displaceable manner on another guide rail of the drawer guide (122) in the direction of movement of the drawer (124) and which comprises a cage (166a, 166b) for the rolling members, wherein
- at least one of the guide rails (136a, 136b, 136c) of the drawer guide (122) comprises a rear rail portion (144a, 144b, 144c) which includes at least one partial section (154a, 154b, 154c, 154d, 154e) that extends in the direction of movement of the drawer (124) and is provided with fluid passage openings (140) in such a manner that the liquid or the gas is adapted to flow through the guide rail (136a, 136b, 136c) concerned when the device (100) is in operation, and/or
- at least one cage (166a, 166b) for the rolling members of the drawer guide (122) comprises a rear cage portion (160a, 160b) which includes at least one partial section (162a, 162b) that extends in the direction of movement of the drawer (124) and is provided with fluid passage openings (164) in such a manner that the liquid or the gas is adapted to flow through the cage (166a, 166b) for the rolling members when the device (100) is in operation.

2. A device in accordance with claim 1, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at least approximately 20 %, and/or
- the ratio of the surface area of the fluid passage openings (164) in the cage (166a, 166b) for the rolling members to the total surface area of the rear cage portion (160a, 160b) in the partial section (162a, 162b) amounts to at least approximately 20%.

3. A device in accordance with claim 2, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at least approximately 25 %, and/or
- the ratio of the surface area of the fluid passage openings (164) in the cage (166a, 166b) for the rolling members to the total surface area of the rear cage portion (160a, 160b) in the partial section (162a, 162b) amounts to at least approximately 25%.

4. A device in accordance with claim 3, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at least approximately 30 %, and/or
- the ratio of the surface area of the fluid passage openings (164) in the cage (166a, 166b) for the rolling members to the total surface area of the rear cage portion (160a, 160b) in the partial section (162a, 162b) amounts to at least approximately 30%.

5. A device in accordance with claim 4, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at least approximately 40 %, and/or
- the ratio of the surface area of the fluid passage openings (164) in the cage (166a, 166b) for the rolling members to the total surface area of the rear cage portion (160a, 160b) in the partial section (162a, 162b) amounts to at least approximately 40%.

6. A device in accordance any one of claims 1 to 5, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at most approximately 90 %, and/or
- the ratio of the surface area of the fluid passage openings (164) in the cage (166a, 166b) for the rolling members to the total surface area of the rear cage portion (160a, 160b) in the partial section (162a, 162b) amounts to at most approximately 90%.

7. A device in accordance with claim 6, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at most approximately 80 %, and/or
- the ratio of the surface area of the fluid passage openings (164) in the cage (166a, 166b) for the rolling members to the total surface area of the rear cage portion (160a, 160b) in the partial section (162a, 162b) amounts to at most approximately 80%.

8. A device in accordance with any one of claims 1 to 7, **characterized in that** at least one of the partial sections (154a, 154b, 154c, 154d, 154e, 162a, 162b) provided with fluid passage openings (140, 164) extends over at least one third of the length of the rear rail portion (144a, 144b, 144b', 144c) or the rear cage portion (160a, 160b).

9. A device in accordance with any one of claims 1 to 8, **characterized in that** the sum of the lengths of the partial sections (154a, 154b, 154c, 154d, 154e, 162a, 162b) provided with fluid passage openings (140, 164) is greater than approximately two thirds of the total length of the rear rail portion (144a, 144b, 144b', 144c) or the rear cage portion (160a, 160b).

10. A device in accordance with any one of claims 1 to 9, **characterized in that** at least one partial section (154a, 154b, 154c, 154d, 154e) of a guide rail (136a, 136b, 136c) of the drawer guide (122) comprises fluid passage openings (140) whose lateral distance from at least one of the lateral edges of the rear rail portion (144a, 144b, 144b', 144c) of the guide rail concerned is less than approximately a quarter of the width of the rear rail portion (144a, 144b, 144b', 144c).

11. A device in accordance with any one of claims 1 to 10, **characterized in that** the pertinent partial section (154a, 154b, 154c, 154d, 154e, 162a, 162b) of the rear rail portion (144a, 144b, 144b', 144c) or that of the rear cage portion (160a, 160b) comprises at least three substantially congruent fluid passage openings (140, 164) .

12. A device in accordance with any one of claims 1 to 11, **characterized in that** the extent of each of the fluid passage openings (140) in the rear rail portion (144a, 144b, 144b', 144c) or in the rear cage portion (160a, 160b) is at most approximately 5 mm in at least one of the directions in which it extends.

13. A device in accordance with any one of claims 1 to 12, **characterized in that** the extent of each of the fluid passage openings (140, 164) in the rear rail portion (144a, 144b, 144b', 144c) or in the rear cage portion (160a, 160b) is at most approximately 5 mm in the direction of movement of the drawer (124).

14. A device in accordance with any one of claims 1 to 13, **characterized in that** at least one guide rail (136a, 136b, 136c) of the drawer guide (122) and at least one cage (166a, 166b) for the rolling members of the same drawer guide (122) are provided with fluid passage openings (140, 164).

15. A device in accordance with claim 14, **characterized in that**, in a state of the drawer guide (122) in which it is pushed completely into the interior (104) of the chamber (102), at least one fluid passage opening (140) in the guide rail (136a, 136b, 136c) and at least one fluid passage opening (164) in the cage (166a, 166b) for the rolling members are aligned with one another.

16. A device in accordance with claim 15, **characterized in that**, in a state of the drawer guide (122) in which it is pushed completely into the interior (104) of the chamber (102), a plurality of fluid passage openings (140) in the guide rail (136a, 136b, 136c) are aligned with a respective fluid passage opening (164) in the cage (166a, 166b) for the rolling members.

17. A device in accordance with claim 16, **characterized in that**, in a state of the drawer guide (122) in which it is pushed completely into the interior (104) of the chamber (102), substantially all of the fluid passage openings (140) in the guide rail (136a, 136b, 136c) are aligned with a respective fluid passage opening (164) in the cage (166a, 166b) for the rolling members.

18. A device in accordance with any one of claims 1 to 17, **characterized in that** at least one guide rail (136a, 136b, 136c) of the drawer guide (122) comprises a rolling member running track (148a, 148b, 148b', 148c) which is provided with at least one fluid passage opening (176).

19. A device in accordance with any one of claims 1 to 18, **characterized in that** at least one rolling member assembly (138a, 138b) of the drawer guide (122) comprises rolling members (150) in the form of balls.

20. A device in accordance with any one of claims 1 to 19, **characterized in that** at least one rolling member assembly (138a, 138b) of the drawer guide (122) comprises rolling members (150) which are each in single-point contact with a rolling member running track (148a, 148b, 148b', 148c) of a guide rail (136a, 136b, 136c) of the drawer guide (122) that is associated with the rolling members.

21. A device in accordance with any one of claims 1 to 20, **characterized in that** the drawer guide (122) comprises at least one further guide rail (136b) in addition to the guide rail (136c) at the drawer side and the guide rail (136a) at the corpus side, said further guide rail (136b) being arranged between the drawer side guide rail (136c) and the corpus side guide rail (136a).

22. A device in accordance with any one of claims 1 to 21, **characterized in that** the drawer guide (122) is in the form of a full withdrawal guide, by means of which the drawer (120) is withdrawable substantially completely from the interior (104) of the chamber (102).

23. A device in accordance with any one of claims 1 to 22, **characterized in that** the device (100) is in the form of a washing machine or a dishwasher.

24. Use of a drawer guide (122) which comprises at least one guide rail (136c) at the drawer side and one guide rail (136a) at the corpus side and at least one rolling member assembly (138a, 136b) by means of which one of the guide rails is guided in displaceable manner on another guide rail of the drawer guide (122) in a direction of movement of the drawer (124) and which comprises a cage (166a, 166b) for the rolling members, wherein
- at least one of the guide rails (136a, 136b, 136c) of the drawer guide (122) comprises a rear rail portion (144a, 144b, 144b', 144c) which includes at least one partial section (154a, 154b, 154c, 154d, 154e) that extends in the direction of movement of the drawer (124) and is provided with fluid passage openings (140) in such a manner that a liquid or a gas is adapted to flow through the guide rail (136a, 136b, 136c), and/or
- at least one cage (166a, 166b) for the rolling members of the drawer guide (122) comprises a rear cage portion (160a, 160b) which includes at least one partial section (162a, 162b) that extends in the direction of movement of the drawer (124) and is provided with fluid passage openings (164) in such a manner that a liquid or a gas is adapted to flow through the cage (166a, 166b) for the rolling members, for the purposes of holding a drawer (120) in displaceable manner on a corpus (106) of a chamber (102) in a device (100) through the interior (104) of which, at least on occasion, there is a flow of liquid or of a gas at an enhanced pressure when the device (100) is in operation.

25. Use in accordance with claim 24, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at least approximately 20 %, and/or
- the ratio of the surface area of the fluid passage openings (164) in the cage (166a, 166b) for the rolling members to the total surface area of the rear cage portion (160a, 160b) in the partial section (162a, 162b) amounts to at least approximately 20%.

26. Use in accordance with any one of claims 24 or 25, **characterized in that**
- the ratio of the surface area of the fluid passage openings (140) in the guide rail (136a, 136b, 136c) to the total surface area of the rear rail portion (144a, 144b, 144b', 144c) in the partial section (154a, 154b, 154c, 154d, 154e) amounts to at most approximately 90 %, and/or
- the ratio of the surface area of the fluid passage openings (164) in the cage (166a, 166b) for the rolling members to the total surface area of the rear cage portion (160a, 160b) in the partial section (162a, 162b) amounts to at most approximately 90%.

27. Use in accordance with any one of claims 24 to 26, **characterized in that** at least one of the partial sections (154a, 154b, 154c, 154d, 154e, 162a, 162b) that is provided with fluid passage openings (140, 164) extends over at least one third of the length of the rear rail portion (144a, 144b, 144b', 144c) or the rear cage portion (160a, 160b).

28. Use in accordance with any one of claims 24 to 27, **characterized in that** the sum of the lengths of the partial sections (154a, 154b, 154c, 154d, 154e, 162a, 162b) that are provided with fluid passage openings (140, 164) is greater than approximately two thirds of the total length of the rear rail portion (144a, 144b, 144b', 144c) or the rear cage portion (160a, 160b).

29. Use in accordance with any one of claims 24 to 28, **characterized in that** at least one partial section (154a, 154b, 154c, 154d, 154e) of a guide rail (136a, 136b, 136c) of the drawer guide (122) comprises fluid passage openings (140) whose lateral distance from at least one of the lateral edges of the rear rail portion (144a, 144b, 144b', 144c) of the guide rail concerned is less than approximately a quarter of the width of the rear rail portion (144a, 144b, 144b', 144c).

30. Use in accordance with any one of claims 24 to 29, **characterized in that** the pertinent partial section (154a, 154b, 154c, 154d, 154e, 162a, 162b) of the rear rail portion (144a, 144b, 144b', 144c) or that of the rear cage portion (160a, 160b) comprises at least three substantially congruent fluid passage openings (140, 164) .

31. Use in accordance with any one of claims 24 to 30, **characterized in that** the extent of each of the fluid passage openings (140) in the rear rail portion (144a, 144b, 144b', 144c) or in the rear cage portion (160a, 160b) is at most approximately 5 mm in at least one of the directions in which it extends.

32. Use in accordance with any one of claims 24 to 31, **characterized in that** the extent of each of the fluid passage openings (140, 164) in the rear rail portion (144a, 144b, 144b', 144c) or in the rear cage portion (160a, 160b) is at most approximately 5 mm in the direction of movement of the drawer (124).

33. Use in accordance with any one of claims 24 to 32, **characterized in that** at least one guide rail (136a, 136b, 136c) of the drawer guide (122) and at least one cage (166a, 166b) for the rolling members of the same drawer guide (122) are provided with fluid passage openings (140, 164).

34. Use in accordance with claim 33, **characterized in that**, in a state of the drawer guide (122) in which it is pushed completely into the interior (104) of the chamber (102), at least one fluid passage opening (140) in the guide rail (136a, 136b, 136c) and at least one fluid passage opening (164) in the cage (166a, 166b) for the rolling members are aligned with one another.

35. Use in accordance with any one of claims 24 to 34, **characterized in that** at least one guide rail (136a, 136b, 136c) of the drawer guide (122) comprises a rolling member running track (148a, 148b, 148b', 148c) which is provided with at least one fluid passage opening (176).

36. Use in accordance with any one of claims 24 to 35, **characterized in that** at least one rolling member assembly (138a, 138b) of the drawer guide (122) comprises rolling members (150) in the form of balls.

37. Use in accordance with any one of claims 24 to 36, **characterized in that** at least one rolling member assembly (138a, 138b) of the drawer guide (122) comprises rolling members (150) which are each in single-point contact with a rolling member running track (148a, 148b, 148b', 148c) of a guide rail (136a, 136b, 136c) of the drawer guide (122) that is associated with the rolling members.

38. Use in accordance with any one of claims 24 to 37, **characterized in that** the drawer guide (122) comprises at least one further guide rail (136b) in addition to the guide rail (136c) at the drawer side and the guide rail (136a) at the corpus side, said further guide rail (136b) being arranged between the drawer side guide rail (136c) and the corpus side guide rail (136a).

39. Use in accordance with any one of claims 24 to 38, **characterized in that** the drawer guide (122) is in the form of a full withdrawal guide, by means of which the drawer (120) is withdrawable substantially completely from the interior (104) of the chamber (102).

40. Use in accordance with any one of claims 24 to 39, **characterized in that** the device (100) is in the form of a washing machine or a dishwasher.

## Revendications

1. Dispositif comprenant un compartiment (102) dont la chambre intérieure (104) est traversée, au moins temporairement pendant le fonctionnement du dispositif (100), par l'écoulement d'un liquide ou d'un gaz se trouvant à une pression plus élevée, le dispositif englobant également un élément ou tiroir extractible (120) et au moins un guidage d'extraction (122) à l'aide duquel l'élément extractible (120) est maintenu sur un corps (106) du compartiment (102) en pouvant coulisser le long d'une direction d'extraction (124),
**caractérisé en ce que** le guidage d'extraction (122) comprend au moins une glissière de guidage (136c) du côté de l'élément extractible et une glissière de guidage (136a) du côté du corps, et au moins un agencement de corps roulants (138a, 138b) au moyen duquel l'une des glissières de guidage est guidée de manière coulissante sur une autre glissière de guidage du guidage d'extraction (122), le long de la direction d'extraction (124), et l'agencement de corps roulants comprend une cage de corps roulants (166a, 166b), et
- au moins l'une des glissières de guidage (136a, 136b, 136c) du guidage d'extraction (122) présente un dos de glissière (144a, 144b, 144c), qui comprend au moins un tronçon partiel (154a, 154b, 154c, 154d, 154e) s'étendant le long de la direction d'extraction (124) et pourvu d'ouvertures de passage de fluide (140) de manière telle, que la glissière de guidage (136a, 136b, 136c) considérée puisse être traversée par l'écoulement de liquide ou de gaz pendant le fonctionnement du dispositif (100), et/ou
- au moins une cage de corps roulants (166a, 166b) du guidage d'extraction (122) présente un dos de cage (160a, 160b), qui comprend au moins un tronçon partiel (162a, 162b) s'étendant le long de la direction d'extraction (124) et pourvu d'ouvertures de passage de fluide (164) de manière telle, que la cage de corps roulants (166a, 166b) puisse être traversée par l'écoulement de liquide ou de gaz pendant le fonctionnement du dispositif (100).

2. Dispositif selon la revendication 1, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est d'au moins environ 20%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est d'au moins environ 20%.

3. Dispositif selon la revendication 2, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est d'au moins environ 25%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est d'au moins environ 25%.

4. Dispositif selon la revendication 3, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est d'au moins environ 30%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est d'au moins environ 30%.

5. Dispositif selon la revendication 4, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est d'au moins environ 40%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est d'au moins environ 40%.

6. Dispositif selon l'une des revendications 1 à 5, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est au plus d'environ 90%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est au plus d'environ 90%.

7. Dispositif selon la revendication 6, **caractérisé en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est au plus d'environ 80%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est au plus d'environ 80%.

8. Dispositif selon l'une des revendications 1 à 7, **caractérisé en ce que** l'un au moins des tronçons partiels (154a, 154b, 154c, 154d, 154e, 162a, 162b) pourvus d'ouvertures de passage de fluide (140, 164) s'étend sur au moins un tiers de la longueur du dos de glissière (144a, 144b, 144b', 144c) ou respectivement du dos de cage (160a, 160b).

9. Dispositif selon l'une des revendications 1 à 8, **caractérisé en ce que** la somme des longueurs des tronçons partiels (154a, 154b, 154c, 154d, 154e, 162a, 162b) pourvus d'ouvertures de passage de fluide (140, 164) est supérieure à environ deux tiers de la longueur totale du dos de glissière (144a, 144b, 144b', 144c) respectivement du dos de cage (160a, 160b).

10. Dispositif selon l'une des revendications 1 à 9, **caractérisé en ce qu'**au moins un tronçon partiel (154a, 154b, 154c, 154d, 154e) d'une glissière de guidage (136a, 136b, 136c) du guidage d'extraction (122) présente des ouvertures de passage de fluide (140) dont la distance latérale à au moins l'un des bords latéraux du dos de glissière (144a, 144b, 144b', 144c) de la glissière de guidage considérée, est inférieure à environ un quart de la largeur du dos de glissière (144a, 144b, 144b', 144c).

11. Dispositif selon l'une des revendications 1 à 10, **caractérisé en ce que** le tronçon partiel (154a, 154b, 154c, 154d, 154e, 162a, 162b) considéré du dos de glissière (144a, 144b, 144b', 144c) ou respectivement du dos de cage (160a, 160b) présente au moins trois ouvertures de passage de fluide (140, 164) sensiblement congruentes.

12. Dispositif selon l'une des revendications 1 à 11, **caractérisé en ce que** chacune des ouvertures de passage de fluide (140) du dos de glissière (144a, 144b, 144b', 144c) ou respectivement du dos de cage (160a, 160b) présente, dans au moins une direction d'étendue, une dimension au plus d'environ 5 mm.

13. Dispositif selon l'une des revendications 1 à 12, **caractérisé en ce que** chacune des ouvertures de passage de fluide (140, 164) du dos de glissière (144a, 144b, 144b', 144c) ou respectivement du dos de cage (160a, 160b) présente, le long de la direction d'extraction (124), une dimension au plus d'environ 5 mm.

14. Dispositif selon l'une des revendications 1 à 13, **caractérisé en ce qu'**au moins une glissière de guidage (136a, 136b, 136c) du guidage d'extraction (122) et au moins une cage de corps roulants (166a, 166b) du même guidage d'extraction (122) sont munies d'ouvertures de passage de fluide (140, 164).

15. Dispositif selon la revendication 14, **caractérisé en ce que** dans un état du guidage d'extraction (122) totalement repoussé dans la chambre intérieure (104) du compartiment (102), au moins une ouverture de passage de fluide (140) de la glissière de guidage (136a, 136b, 136c) et au moins une ouverture de passage de fluide (164) de la cage de corps roulants (166a, 166b) sont mutuellement alignées.

16. Dispositif selon la revendication 15, **caractérisé en ce que** dans l'état du guidage d'extraction (122) totalement repoussé dans la chambre intérieure (104) du compartiment (102), plusieurs ouvertures de passage de fluide (140) de la glissière de guidage (136a, 136b, 136c) sont alignées respectivement avec une ouverture de passage de fluide (164) de la cage de corps roulants (166a, 166b).

17. Dispositif selon la revendication 16, **caractérisé en ce que** dans l'état du guidage d'extraction (122) totalement repoussé dans la chambre intérieure (104) du compartiment (102), sensiblement toutes les ouvertures de passage de fluide (140) de la glissière de guidage (136a, 136b, 136c) sont alignées respectivement avec une ouverture de passage de fluide (164) de la cage de corps roulants (166a, 166b).

18. Dispositif selon l'une des revendications 1 à 17, **caractérisé en ce qu'**au moins une glissière de guidage (136a, 136b, 136c) du guidage d'extraction (122) présente un chemin de circulation de corps roulants (148a, 148b, 148b', 148c), qui est pourvu d'au moins une ouverture de passage de fluide (176).

19. Dispositif selon l'une des revendications 1 à 18, **caractérisé en ce qu'**au moins un agencement de corps roulants (138a, 138b) du guidage d'extraction (122) comprend des corps roulants (150) réalisés sous forme de billes.

20. Dispositif selon l'une des revendications 1 à 19, **caractérisé en ce qu'**au moins un agencement de corps roulants (138a, 138b) du guidage d'extraction (122) comprend des corps roulants (150), qui sont chacun en contact en un point avec un chemin de circulation de corps roulants (148a, 148b, 148b', 148c) d'une glissière de guidage (136a, 136b, 136c) du guidage d'extraction (122), associée aux corps roulants.

21. Dispositif selon l'une des revendications 1 à 20, **caractérisé en ce que** le guidage d'extraction (122) comprend, en-dehors de la glissière de guidage (136c) côté élément extractible et de la glissière de guidage (136a) côté corps, au moins une autre glissière de guidage (136b) qui est agencée entre la glissière de guidage (136c) côté élément extractible et la glissière de guidage (136a) côté corps.

22. Dispositif selon l'une des revendications 1 à 21, **caractérisé en ce que** le guidage d'extraction (122) est réalisé en tant que guidage d'extraction totale, au moyen duquel l'élément ou tiroir extractible (120) peut être extrait sensiblement en totalité de la chambre intérieure (104) du compartiment (102).

23. Dispositif selon l'une des revendications 1 à 22, **caractérisé en ce que** le dispositif (100) est réalisé en tant que machine de rinçage ou de lavage, lave-vaisselle ou machine à laver.

24. Utilisation d'un guidage d'extraction (122) comprenant au moins une glissière de guidage (136c) du côté d'un élément ou tiroir extractible et une glissière de guidage (136a) du côté d'un corps, et au moins un agencement de corps roulants (138a, 138b) au moyen duquel l'une des glissières de guidage est guidée de manière coulissante sur une autre glissière de guidage du guidage d'extraction (122), le long d'une direction d'extraction (124), l'agencement de corps roulants comprenant une cage de corps roulants (166a, 166b), et
- au moins l'une des glissières de guidage (136a, 136b, 136c) du guidage d'extraction (122) présentant un dos de glissière (144a, 144b, 144b', 144c), qui comprend au moins un tronçon partiel (154a, 154b, 154c, 154d, 154e) s'étendant le long de la direction d'extraction (124) et pourvu d'ouvertures de passage de fluide (140) de manière telle, que la glissière de guidage (136a, 136b, 136c) puisse être traversée par l'écoulement d'un liquide ou d'un gaz, et/ou
- au moins une cage de corps roulants (166a, 166b) du guidage d'extraction (122) présentant un dos de cage (160a, 160b), qui comprend au moins un tronçon partiel (162a, 162b) s'étendant le long de la direction d'extraction (124) et pourvu d'ouvertures de passage de fluide (164) de manière telle, que la cage de corps roulants (166a, 166b) puisse être traversée par l'écoulement d'un liquide ou d'un gaz,
en vue du maintien coulissant d'un élément ou tiroir extractible (120) sur un corps (106) d'un compartiment (102) dans un dispositif (100), dont la chambre intérieure (104) est traversée, au moins temporairement pendant le fonctionnement du dispositif (100), par l'écoulement d'un liquide ou d'un gaz se trouvant à une pression plus élevée.

25. Utilisation selon la revendication 24, **caractérisée en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est d'au moins environ 20%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est d'au moins environ 20%.

26. Utilisation selon l'une des revendications 24 ou 25, **caractérisée en ce que**
- la proportion de surface des ouvertures de passage de fluide (140) de la glissière de guidage (136a, 136b, 136c) relativement à la surface totale du dos de glissière (144a, 144b, 144b', 144c) dans le tronçon partiel (154a, 154b, 154c, 154d, 154e) est au plus d'environ 90%, et/ou
- la proportion de surface des ouvertures de passage de fluide (164) de la cage de corps roulants (166a, 166b) relativement à la surface totale du dos de cage (160a, 160b) dans le tronçon partiel (162a, 162b) est au plus d'environ 90%.

27. Utilisation selon l'une des revendications 24 à 26, **caractérisée en ce que** l'un au moins des tronçons partiels (154a, 154b, 154c, 154d, 154e, 162a, 162b) pourvus d'ouvertures de passage de fluide (140, 164) s'étend sur au moins un tiers de la longueur du dos de glissière (144a, 144b, 144b', 144c) ou respectivement du dos de cage (160a, 160b).

28. Utilisation selon l'une des revendications 24 à 27, **caractérisée en ce que** la somme des longueurs des tronçons partiels (154a, 154b, 154c, 154d, 154e, 162a, 162b) pourvus d'ouvertures de passage de fluide (140, 164) est supérieure à environ deux tiers de la longueur totale du dos de glissière (144a, 144b, 144b', 144c) respectivement du dos de cage (160a, 160b).

29. Utilisation selon l'une des revendications 24 à 28, **caractérisée en ce qu'**au moins un tronçon partiel (154a, 154b, 154c, 154d, 154e) d'une glissière de guidage (136a, 136b, 136c) du guidage d'extraction (122) présente des ouvertures de passage de fluide (140) dont la distance latérale à au moins l'un des bords latéraux du dos de glissière (144a, 144b, 144b', 144c) de la glissière de guidage considérée, est inférieure à environ un quart de la largeur du dos de glissière (144a, 144b, 144b', 144c).

30. Utilisation selon l'une des revendications 24 à 29, **caractérisée en ce que** le tronçon partiel (154a, 154b, 154c, 154d, 154e, 162a, 162b) considéré du dos de glissière (144a, 144b, 144b', 144c) ou respectivement du dos de cage (160a, 160b) présente au moins trois ouvertures de passage de fluide (140, 164) sensiblement congruentes.

31. Utilisation selon l'une des revendications 24 à 30, **caractérisée en ce que** chacune des ouvertures de passage de fluide (140) du dos de glissière (144a, 144b, 144b', 144c) ou respectivement du dos de cage (160a, 160b) présente, dans au moins une direction d'étendue, une dimension au plus d'environ 5 mm.

32. Utilisation selon l'une des revendications 24 à 31, **caractérisée en ce que** chacune des ouvertures de passage de fluide (140, 164) du dos de glissière (144a, 144b, 144b', 144c) ou respectivement du dos de cage (160a, 160b) présente, le long de la direction d'extraction (124), une dimension au plus d'environ 5 mm.

33. Utilisation selon l'une des revendications 24 à 32, **caractérisée en ce qu'**au moins une glissière de guidage (136a, 136b, 136c) du guidage d'extraction (122) et au moins une cage de corps roulants (166a, 166b) du même guidage d'extraction (122) sont munies d'ouvertures de passage de fluide (140, 164).

34. Utilisation selon la revendication 33, **caractérisée en ce que** dans un état du guidage d'extraction (122) totalement repoussé dans la chambre intérieure (104) du compartiment (102), au moins une ouverture de passage de fluide (140) de la glissière de guidage (136a, 136b, 136c) et au moins une ouverture de passage de fluide (164) de la cage de corps roulants (166a, 166b) sont mutuellement alignées.

35. Utilisation selon l'une des revendications 24 à 34, **caractérisée en ce qu'**au moins une glissière de guidage (136a, 136b, 136c) du guidage d'extraction (122) présente un chemin de circulation de corps roulants (148a, 148b, 148b', 148c), qui est pourvu d'au moins une ouverture de passage de fluide (176).

36. Utilisation selon l'une des revendications 24 à 35, **caractérisée en ce qu'**au moins un agencement de corps roulants (138a, 138b) du guidage d'extraction (122) comprend des corps roulants (150) réalisés sous forme de billes.

37. Utilisation selon l'une des revendications 24 à 36, **caractérisée en ce qu'**au moins un agencement de corps roulants (138a, 138b) du guidage d'extraction (122) comprend des corps roulants (150), qui sont chacun en contact en un point avec un chemin de circulation de corps roulants (148a, 148b, 148b', 148c) d'une glissière de guidage (136a, 136b, 136c) du guidage d'extraction (122), associée aux corps roulants.

38. Utilisation selon l'une des revendications 24 à 37, **caractérisée en ce que** le guidage d'extraction (122) comprend, en-dehors de la glissière de guidage (136c) côté élément extractible et de la glissière de guidage (136a) côté corps, au moins une autre glissière de guidage (136b) qui est agencée entre la glissière de guidage (136c) côté élément extractible et la glissière de guidage (136a) côté corps.

39. Utilisation selon l'une des revendications 24 à 38, **caractérisée en ce que** le guidage d'extraction (122) est réalisé en tant que guidage d'extraction totale, au moyen duquel l'élément ou tiroir extractible (120) peut être extrait sensiblement en totalité de la chambre intérieure (104) du compartiment (102).

40. Utilisation selon l'une des revendications 24 à 39, **caractérisée en ce que** le dispositif (100) est réalisé en tant que machine de rinçage ou de lavage, lave-vaisselle ou machine à laver.
